# EUROPEAN PATENT APPLICATION

(11) **EP 1 841 228 A1**
(43) Date of publication of application: **03.10.2007**
(21) Application number: 06711907.3
(22) Date of filing: 18.01.2006
(51) Int. Cl.: H04N 7/173, H04H 1/00, H04N 5/44

(54) **BROADCAST RECEPTION DEVICE**

(30) Priority: 19.01.2005 JP 2005011650
(71) Applicant: MATSUSHITA ELECTRIC INDUSTRIAL CO., LTD., Osaka 571-8501 (JP)
(72) Inventor: SUZUKI, Takaaki c/o Matsushita Elec.Ind. Co.,Ltd., Chuo-ku, Osaka-shi, Osaka 540-6319 (JP)
(74) Representative: Pautex Schneider, Nicole Véronique
(86) International application number: PCT/JP2006/300638
(87) International publication number: WO 2006/077882

(57) **Abstract**

A broadcast reception device that provides correct information to a user using SI even when plural types of SI are distributed.
The broadcast reception device includes: a primary storage unit (1808) and a secondary storage unit (1807) which store a main service-list; and a CPU (1806) which acquires, from a broadcast signal, SI constructed using NIT, NTT, and SVCT, and SI constructed using LVCT, updates the main service-list based on service data included in the NIT, NTT, and SVCT SI when that SI has been acquired, and updates the main service-list based on service data included in the LVCT SI when that SI has been acquired.

## Description

### Technical Field

The present invention relates to a broadcast reception device that receives digital broadcasts, and in particular to a broadcast reception device that executes a program which acquires TV program information from a broadcast signal.

### Background Art

A broadcast reception device that receives digital broadcasts (a digital broadcast reception device) often includes a function for displaying an electronic program guide (EPG). The EPG provides detailed information about channels, TV programs, and so on to a user, thereby making it easy for the user to make channel selections.

The channel information and TV program information displayed in the EPG is included in the broadcast signal sent from the broadcasting station to the digital broadcast reception device; the digital broadcast reception device acquires this information and uses it in displaying the EPG.

Generally, the channel information and TV program information is collectively called "Service Information", or "SI". The transmission system and format of the SI varies by region, and thus broadcasting management groups in each region determine the transmission system and format of their region. For example, in Japan, the SI format used is ARIB-SI, developed by the Association of Radio Industries and Businesses (ARIB).

Europe uses the SI format DVB-SI, developed by Digital Video Broadcasting (DVB).

United States cable systems use the SI format SCTE-SI, developed by the Society of Cable Telecommunications Engineers (SCTE). Moreover, the SI format Program and System Information Protocol (PSIP), developed by the Advanced Television Systems Committee (ATSC), is used in United States terrestrial broadcast environments.

The SI includes information of high importance to real-time functionality, such as TV program information regarding a TV program being broadcast at that point in time, and therefore broadcasting stations are continually embedding the latest SI in broadcast signals and transmitting them to digital broadcast reception devices. Digital broadcast reception devices store received SI and use the stored SI in EPG display. However, when the digital broadcast reception device detects that the SI embedded in a received broadcast signal is new SI meant to update the SI that is already stored, the digital broadcast reception device stores the new SI and uses the new SI in the EPG display thereafter.

Accordingly, the broadcasting station on the sending side appropriately updates and sends the SI, and the digital broadcast reception device on the receiving side constantly monitors the new SI and makes updates accordingly, thereby making it possible for the user to always have an EPG that includes the latest SI.

As can be seen, the SI is important information that is the basis of the EPG, and thus it is necessary for the digital broadcast reception device to correctly perform updates based on the updated SI. However, there are situations in which the stored SI is corrupted and normal readout cannot be performed thereafter, such as the case where incorrect SI is received due to an error on the broadcasting station side or degradation of the broadcast environment, the case where power is turned off during the SI update process, and so on.

When such a situation occurs, the EPG cannot be displayed properly thereafter, and thus the ease of operation drops considerably. Technology for preventing such a drop in the ease of operation has been proposed in the past (for example, Patent References 1 and 2).

As a measure against this problem, in Patent Reference 1, SI with a high degree of real-time functionality is repeatedly sent with high frequentness, thereby shortening the time required for recovery when the SI is corrupted. In addition, in Patent Reference 2, old SI is moved to a temporary buffer when the SI is to be updated; should the new SI fail to be recorded, the old SI is restored from the temporary buffer and used, thus avoiding an SI update failure.
Patent Reference 1: Japanese Laid-Open Patent Application No. 8-289266
Patent Reference 2: Japanese Laid-Open Patent Application No. 2002-527954

### Disclosure of Invention

### Problems that Invention is to Solve

However, there is a problem in Patent References 1 and 2 in that broadcast reception devices cannot properly manage the SI in the case where plural types of SI are distributed, and therefore provide faulty information to the user. This problem shall hereafter be described in detail.

As stated earlier, the format of SI differs depending on the region; however, one point that is common in all types of SI is that information is expressed using table information (SI tables).

For example, the DVB standard SI (DVB-SI) used in Europe includes the following SI tables, each of which are transmitted individually from the broadcasting station: a Service Definition Table (SDT) which includes a channel name and attribute information; an Event Information Table (EIT) which includes TV program information; and a Network Information Table (NIT) which includes frequency information of the signals that send each channel. Digital broadcast reception devices used in Europe configure the EPG by receiving these SI tables and combining the information denoted therein. Information updates are performed per table, so that when, for example, a channel name has been changed, rather than having to update all SI tables, only the SDT must be updated.

With DVB-SI, there is only one SI table that transmits the same type of information, and therefore, the channel name, for example, can be acquired simply by continuously acquiring the SDT. However, the situation is different for the SCTE standard SI (SCTE-SI) used in United States cable systems. Plural tables transmit the same type of information, and furthermore, there are cases where these plural tables are transmitted from the broadcasting station simultaneously.

Similar to the DVB-SI, the SCTE-SI includes: a Network Information Table (NIT) which includes frequency information; a Network Text Table (NTT) which includes channel name information; and a Short-form Virtual Channel Table (SVCT) which includes basic information of a channel. The digital broadcast reception device combines the information carried by these SI tables. However, in addition to these SI tables, a different type of SI table exists in the SCTE-SI standard. This table is the Long-form Virtual Channel Table (LVCT), which includes information that is split up between the abovementioned three types of tables; in other words, the information that makes up the three SI tables NIT, NTT, and SVCT is included in the LVCT. Moreover, there are cases in which the LVCT is sent in parallel with the NIT, NTT, and SVCT. In such a case, the information that can be configured from the NIT, NTT, and SVCT and the information included in the LVCT must be equivalent, and information about all channels must be present.

This being the case, a digital broadcast reception device may use the three SI tables NIT, NTT, and SVCT to construct one piece of SI, and store this SI, or may use the single LVCT SI table to construct one piece of SI, and store this SI. In other words, there are a number of methods for constructing the SI, and the data format of the SI table used, the frequency band to extract the SI table from, and so on differ depending on the method.

The reason is that SI constructed from the former and the latter SI tables are identical if there are no inconsistencies in the sent data. However, a situation in which cases or time slots in which the SI actually differ from one another are present can be considered.

For example, one such case that can be considered is one in which there is a problem in the sending of the data itself, and the SI constructed from the former and the latter SI tables differ from one another. For example, when broadcast of a channel A is newly commenced, the broadcasting station must update the SI table broadcast hitherto, thereby including the information of channel A, in order to display the information of channel A in the EPG. At this time, in the case where, for example, the LVCT is updated and the NIT, NTT, and SVCT are not updated due to a breakdown in the broadcast station system, inconsistencies appear between the tables.

Even if there is no problem in the data sending, at the time of an SI table update as mentioned above, the tables have differing time periods. Each SI table is individually and repeatedly transmitted every few seconds to every few minutes; even if the details of an SI table have been updated, the digital broadcast reception device does not necessarily receive all of the SI tables at the same time.

For example, even if the NIT, NTT, SVCT, and LVCT have all been updated, they are not all necessarily sent simultaneously, and thus the timing at which all of the updated NIT, NTT, and SVCT tables are received differs from that at which the updated LVCT is received. Therefore, a time period in which one of the tables has been updated, but one of them has not yet been updated, will arise without fail.

Moreover, in the United States cable broadcast environment, and even more complicated situation arises. Digital broadcast reception devices in the Unites States cable environment simultaneously receive broadcast signals in two types of frequency bands, known as In-Band and Out-of-Band (OOB). SCTE-SI is included in broadcast signals received Out-of-Band. On the other hand, an SI table prescribed in the Program and System Information Protocol (PSIP) is included in broadcast signals received In-Band, and a unique type of SI is constructible therefrom. Naturally, there should not be inconsistencies between SI constructible from SI tables of the PSIP protocol and SI constructible from SCTE-SI SI tables acquired OOB; however, there is still the possibility that inconsistencies in the information will arise between the SCTE-SI and the PSIP, for reasons such as mentioned above, in this case as well.

Conventional digital broadcast reception devices manage SI under the premise that identical types of information are included in a single SI table. When this concept is applied, it follows that, even in the case where plural types of tables (a group) carry the same type of information, one of those tables (groups) is selected and the SI is acquired therefrom. Ultimately, for example, the NIT, NTT, and SVCT are continuously monitored, while the LVCT, In-Band PSIP, and the like are ignored. In such a case, it is impossible to respond when a problem occurs in the SI table in question even if there are no problems in the other SI tables. Conventionally, only the NIT, NTT, and SVCT are continuously monitored, and thus, for example, in the case where the information included in the LVCT is correct but the NIT, NTT, and SVCT are for some reason incorrect, the digital broadcast reception device cannot correctly display the EPG.

Having been conceived in light of these problems, an object of the present invention is to provide a broadcast reception device which can use SI to provide a user with correct information even when plural types of SI are distributed.

### Means to Solve the Problems

In order to solve the abovementioned problems, a broadcast reception device according to the present invention receives a broadcast signal and performs an operation in accordance with the broadcast signal, and includes: a storage unit which stores first service notification information which includes service data indicating a service to present to a viewer; an acquisition unit which acquires, from the broadcast signal, second and third service notification information, each of which includes service data indicating a service to present to the viewer, and which differs in format from the other; and an updating unit which updates the first service notification information based on the service data included in the second service notification information when the acquisition unit has acquired the second service notification information, and updates the first service notification information based on the service data included in the third service notification information when the acquisition unit has acquired the third service notification information. For example, identification information for identifying the service indicated by the service data is assigned to each unit of service data included in the first, second, and third service notification information, and the updating unit includes: a first addition unit which adds the service data of the second service notification information to the first service notification information, when identification information identical to the identification information of the service data included in the second service notification information is not present in the first service notification information; and a second addition unit which adds the service data of the third service notification information to the first service notification information, when identification information identical to the identification information of the service data included in the third service notification information is not present in the first service notification information. In addition, the updating unit further includes: a first changing unit which changes the details of the service data included in the first service notification information to the details of the service data included in the second service notification information, when the service data in the first and second service notification information have identical identification information and mutually different details; and a second changing unit which changes details of the service data included in the first service notification information to the details of the service data included in the third service notification information, when the service data in the first and third service notification information have identical identification information and mutually different details.

For example, even in a case where SI made up of three types of SI tables, or NIT, NTT, and SVCT, and SI made up of one type of SI table, or LVCT, are distributed as second and third units of service notification information respectively, first service notification information is updated based on the respective second and third units of service notification information. Therefore, as opposed to a case where the first service information is updated based only on either the second or third service notification information, it is possible to manage the first service notification information as a main service-list accurately and without inconsistencies, and thus possible to provide the user with correct information.

Moreover, plural units of service data may be present in the first service notification information, and the broadcast reception device may further include: a search unit which acquires the identification information and searches for service data corresponding to the identification information within the first service notification information; and an output unit which outputs the service data searched-out by the search unit.

Accordingly, the first service notification information, or the main service-list, is searched for service data, and if, for example, the program for displaying the EPG provides identification information to the search unit, service data corresponding to that identification information can easily be acquired. As a result, an EPG based on this service data can easily be displayed.

Moreover, the broadcast receiving may further include a deletion unit which deletes the service data searched-out by the search unit.

Through this, if the identification information is provided to the search unit, the service data corresponding to that identification information can easily be deleted from the main service-list, or the first service notification information.

Furthermore, the first service notification information may be configured of fourth and fifth service notification information which include service data indicating services to present to the viewer, and the updating unit may update: the fourth service notification information based on the service data included in the second service notification information when the acquisition unit has acquired the second service notification information; and the fifth service notification information based on the service data included in the third service notification information when the acquisition unit has acquired the third service notification information.

For example, even in a case where SI made up of three types of SI tables, or NIT, NTT, and SVCT, and SI made up of one type of SI table, or LVCT, are distributed as second and third units of service notification information respectively, a fourth unit of service notification information is updated based on the second unit of service notification information, and a fifth unit of service notification information is updated based on the third unit of service notification information. Therefore, as opposed to a case where the fourth service information is updated based only on either the second or third service notification information, it is possible to manage the fourth and fifth units of service notification information, or main service-lists, accurately and without inconsistencies; furthermore, if the fourth and fifth units of service notification information are used, it is possible to provide the user with correct information.

In addition, priority levels may be assigned to the fourth and fifth service notification information, and the broadcast reception device may further include: a search unit which acquires the identification information, and searches for service data within a search range while switching the search range from service notification information of a higher priority level to service notification information of a lower priority level, the service data corresponding to the identification information; and an output unit which outputs the service data searched-out by the search unit.

Accordingly, service notification information with a high priority level is preferentially searched for service data, and if, for example, the program for displaying the EPG notifies the search unit of the identification information, the service data corresponding to that identification information can easily be acquired from service notification information of a high priority. As a result, an EPG based on this service data can easily be displayed.

Furthermore, when the search unit finds service data corresponding to the identification information, the output unit may output the service data.

Accordingly, it is possible for the program for displaying the EPG to, for example, acquire the service data early and display the EPG.

In addition, the broadcast reception device may further include a deletion unit which deletes the service data searched-out by the search unit.

Accordingly, if the identification information is provided to the search unit, the service data corresponding to that identification information can easily be deleted from the first service notification information and second service notification information, or the main service-list.

In addition, identification information for identifying the service indicated by the service data may be assigned to each unit of service data included in the first, second, and third service notification information, and the updating unit may include: a first deletion updating unit which deletes the service data from the first service notification information, when identification information identical to the identification information of the service data included in the first service notification information is not present in the second service notification information; and a second deletion updating unit which deletes the service data from the first service notification information, when identification information identical to the identification information of the service data included in the first service notification information is not present in the third service notification information.

Through this, service data not present in the second and third units of service notification information respectively is deleted from the first service notification information; therefore, it is possible to manage the first service notification information accurately and without inconsistencies, as well as curbing the amount of the first service notification information.

Furthermore, identification information for identifying the service indicated by the service data may be assigned to each unit of service data included in the first, second, and third service notification information, and the updating unit may include: a first history addition unit which adds the service data of the second service notification information to the first service notification information while leaving the service data of the first service notification information as a history, when the service data in the first and second service notification information have identical identification information and mutually different details; and a second history addition unit which adds the service data of the third service notification information to the first service notification information while leaving the service data of the first service notification information as a history, when the service data in the first and third service notification information have identical identification information and mutually different details.

Accordingly, even if the first service notification information is updated, the service data already present remains as a history; therefore, when service data added to the first service notification information is incorrect, it is possible to use the service data that remains as the history, thus improving the convenience of the first service information.

In addition, identification information for identifying the service indicated by the service data may be assigned to each unit of service data included in the first, second, and third service notification information, and the updating unit may include: a first history setting unit which sets the service data in an unusable state, as a history, when identification information identical to the identification information of the service data included in the first service notification information is not present in the second service notification information; and a second history setting unit which sets the service data in an unusable state, as a history, when identification information identical to the identification information of the service data included in the first service notification information is not present in the third service notification information.

Accordingly, even if the first service notification information is updated, the service data already present remains as a history; therefore, it is possible to restore the service data remaining as the history to a usable state at an arbitrary time, thus improving the convenience of the first service information.

Moreover, the storage unit may include a volatile memory and a non-volatile memory, and the updating unit may generate, in advance, a copy of the first service notification information based on the first service notification information stored in the non-volatile memory, store the copy in the volatile memory, and update the copied first service notification information stored in the volatile memory when the first service notification information is to be updated.

Through this, the original first service notification information remains in a non-volatile memory; therefore, the original first service notification information remaining in the non-volatile memory can be used when an update fails as well as when power to the broadcast reception device is turned off, thus preventing loss of the first service notification information.

Moreover, after finishing the update of the copied first service notification information stored in the volatile memory, the updating unit may write the updated first service notification information into the non-volatile memory.

Accordingly, loss of the updated first service notification information can be prevented.

In addition, when the details of the updated first service notification information differ from the details of the first service notification information stored as an original in the non-volatile memory, the updating unit may write the updated first service notification information into the non-volatile memory.

Accordingly, when the details of the updated first service notification information and the details of the first service notification information stored in the non-volatile memory as an original are identical, the updated first service notification information is not written to the non-volatile memory; therefore, the number of wasteful writes can be reduced, and the operational load lightened.

In addition, the updating unit may write the updated first service notification information into the non-volatile memory when requested to perform a write into the non-volatile memory.

Accordingly, if, for example, the program used within the broadcast reception device requests the updating unit to perform a write, the updated first service notification information is written to the non-volatile memory; therefore, it is possible to write to the non-volatile memory with a desirable timing.

In addition, when writing the updated first service notification information into the non-volatile memory, the updating unit may write the updated first service notification information as a new original into the non-volatile memory after deleting the first service notification information stored as the original from the non-volatile memory.

Through this, the first service notification information stored as an original in the non-volatile memory is deleted; therefore, it is possible to reduce the storage capacity of the non-volatile memory, as compared to, for example, a case in which the first service notification information is not deleted and the updated first service notification information is written to the non-volatile memory.

Moreover, when writing the updated first service notification information into the non-volatile memory, the updating unit may delete the first service notification information stored as the original in the non-volatile memory before the write, after writing the updated first service notification information as a new original into the non-volatile memory.

Through this, the updated first service notification information is written to the non-volatile memory first; therefore, even if that write fails for some reason, it is possible to use the first service notification information stored as an original in the non-volatile memory prior to the write, thereby preventing loss of the first service notification information.

Moreover, when writing the updated first service notification information into the non-volatile memory, the updating unit may write the updated first service notification information as a new original into the non-volatile memory, and when power is resupplied to the broadcast reception device after the write, the updating unit may generate a copy of the first service notification information written as the new original and store the copy in the volatile memory.

Accordingly, even if the updated first service notification information is written to the non-volatile memory, the first service notification information stored as an original in the non-volatile memory prior to the write remains; therefore, when the first service notification information written as a new original is incorrect, it is possible to use the first service notification information stored in the non-volatile memory prior to the write, thereby improving the usability of the apparatus.

Note that the present invention can be realized not only as such a broadcast reception device, but also as a method or program for performing the operations of the broadcast reception device and a storage medium in which such a program is stored.

### Effects of the Invention

The broadcast reception device according to the present invention has an effect in that correct information can be provided to a user using SI even when plural types of SI are distributed.

### Brief Description of Drawings

FIG. 1 is a diagram showing a configuration of a broadcast system according to the present invention.
FIG. 2 is a diagram showing one example of use of frequency bands used in communications between a system on the broadcast station side and a terminal apparatus, in a cable television system according to the present invention.
FIG. 3 is a diagram showing one example of use of frequency bands used in communications between a system on the broadcast system side and a terminal apparatus, in a cable television system according to the present invention.
FIG. 4 is a diagram showing one example of use of frequency bands used in communications between a system on the broadcast system side and a terminal apparatus, in a cable television system according to the present invention.
FIG. 5 is a diagram showing a configuration of a TS packet defined by MPEG-2 specifications.
FIG. 6 is a schematic diagram of an MPEG-2 transport stream.
FIG, 7 is a diagram showing an example of division when a PES packet defined by the MPEG-2 specifications is transmitted using a TS packet.
FIG. 8 is a diagram showing an example of division when an MPEG-2 section defined by MPEG-2 specifications is transmitted using a TS packet.
FIG. 9 is a diagram showing a configuration of an MPEG-2 section defined by MPEG-2 specifications.
FIG. 10 is a diagram showing an example of use of an MPEG-2 section defined by MPEG-2 specifications.
FIG. 11 is a diagram showing an example of use of a PMT defined by MPEG-2 specifications.
FIG. 12 is a diagram showing an example of use of a PAT defined by MPEG-2 specifications.
FIG. 13 is a diagram showing an example of use of an NIT-CDS as defined in the SCTE-SI specifications.
FIG. 14 is a diagram showing an example of use of an NIT-MMS as defined in the SCTE-SI specifications.
FIG. 15 is a diagram showing an example of use of an NTT as defined in the SCTE-SI specifications.
FIG. 16 is a diagram showing an example of use of an SVCT-VCM as defined in the SCTE-SI specifications.
FIG. 17 is a diagram showing an example of a service list constructed using information from NIT, NTT, and SVCT, as defined in the SCTE-SI specifications.
FIG. 18 is a configuration diagram showing an example of a hardware configuration of a broadcast reception device according to the present invention.
FIG. 19 is a diagram showing an example of a front panel of an input unit in a hardware structure of a broadcast reception device according to the present invention.
FIG. 20 is a diagram showing a structure of the program stored in a broadcast reception device according to the present invention.
FIG. 21A is a diagram showing an example of a TV program chart shown in a display of a broadcast reception device according to the present invention.
FIG. 21B is a diagram showing another example of a TV program chart shown in a display of a broadcast reception device according to the present invention.
FIG. 22A is a diagram showing an example of information stored in a primary storage unit according to the present invention.
FIG. 22B is a diagram showing another example of information stored in a primary storage unit according to the present invention.
FIG. 22C is a diagram showing yet another example of information stored in a primary storage unit according to the present invention.
FIG. 23 is a schematic diagram showing details of an AIT, as prescribed by the DVB-MHP standard, according to the present invention.
FIG. 24 is a schematic diagram showing a file system sent in DSMCC format according to the present invention.
FIG. 25 is a diagram showing an internal structure of an SI management module according to the present invention.
FIG. 26 is a flowchart showing an operation of a service list control unit at the time of a main service-list update, according to the first embodiment of the present invention.
FIG. 27 is a diagram showing an example of a service list.
FIG. 28 is a diagram showing an example of a service list.
FIG. 29 is a diagram showing an example of a service list.
FIG. 30 is a diagram showing an example of an EPG screen display.
FIG. 31 is a diagram showing an example of a service list.
FIG. 32 is a diagram showing an example of a main service-list.
FIG. 33 is a diagram showing an example of an EPG screen display.
FIG. 34 is a diagram showing an example of a service list.
FIG. 35 is a diagram showing an example of a main service-list.
FIG. 36 is a diagram showing an example of an EPG screen display.
FIG. 37 is a diagram showing an example of a service list that holds history information.
FIG. 38 is a flowchart showing an operation of a service list acquisition unit according to the second embodiment of the present invention.

### Numerical References

101 broadcast station system
111 broadcast reception device (terminal apparatus A)
112 broadcast reception device (terminal apparatus B)
113 broadcast reception device (terminal apparatus C)
1800 broadcast reception device
1801 QAM demodulator
1802 TS decoder
1803 AV decoder
1804 speaker
1805 display
1806 CPU
1807 secondary storage unit
1808 primary storage unit
1809 ROM
1810 input unit
181 CableCARD
1812 QPSK demodulator
1813 QPSK modulator
2006 SI management module
2501 service list control unit
2502 service list storage unit
2503 SI table monitoring unit
2504 service list acquisition unit

### Best Mode for Carrying Out the Invention

### (First Embodiment)

The present invention assumes three types of operational forms, which are a satellite system, a terrestrial broadcast system, and a cable system, as the target broadcasting system. The satellite system is a form in which a broadcast signal is transmitted to a broadcast reception device using a satellite; the terrestrial broadcast system is a form in which a broadcast signal is transmitted to a broadcast receiving terminal using a ground wave signal transmission apparatus; and the cable system is a form in which a broadcast signal is transmitted to a broadcast reception device using a cable head-end. As the present invention has no direct relationship with the differences between each broadcasting system, the present invention can be applied regardless of which broadcasting system is used.

The embodiment of a broadcasting system according to the present invention shall be described with reference to the diagrams.

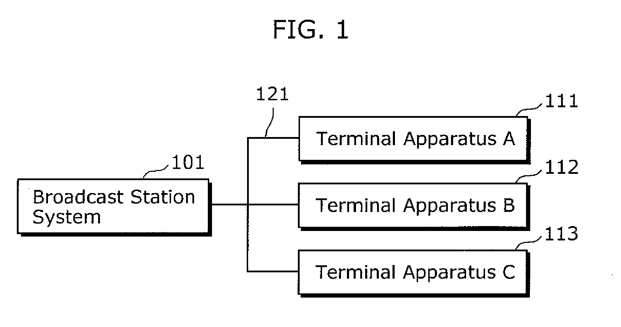

FIG. 1 is a block diagram showing a relationship of apparatuses that make up the broadcasting system. This broadcasting system is configured of a broadcast station system 101 and three broadcast reception devices, or a terminal apparatus A111, a terminal apparatus B112, and a terminal apparatus C113. A coupling 121 between the broadcast station system and each terminal apparatus may be wired or wireless. For example, in the cable system, the broadcast station system and each terminal apparatus are connected by wires. On the other hand, in the satellite/terrestrial broadcast systems, no wired coupling exists in an outbound direction (from the broadcast station system to each terminal apparatus), and thus the broadcast signal is transmitted using radio waves. In regards to an inbound direction (from each terminal apparatus to the broadcast station system), there are both wired connections, using a telephone line, wired Internet, and the like, as well as wireless connections, using wireless communications. Each terminal apparatus sends information such as user input to the broadcast station system. In the present embodiment, three terminal apparatuses are connected to one broadcast station system, but the present invention can be applied even with an arbitrary number of terminal apparatuses connected to the broadcast station system.

The broadcast station system 101 sends information such as video/audio/data for data broadcasting in a broadcast signal to a plurality of terminal apparatuses. The broadcast signal is sent using a frequency within a frequency band set by an operational default of the broadcasting system, the laws of a region/country in which the broadcasting system is operated, and so on.

An example of a broadcast signal transmission standard of the cable system shall be given. In the cable system shown in the present example, the frequency bands used in broadcast signal transmission are divided based on data details and transmission direction (inbound, outbound) and used.

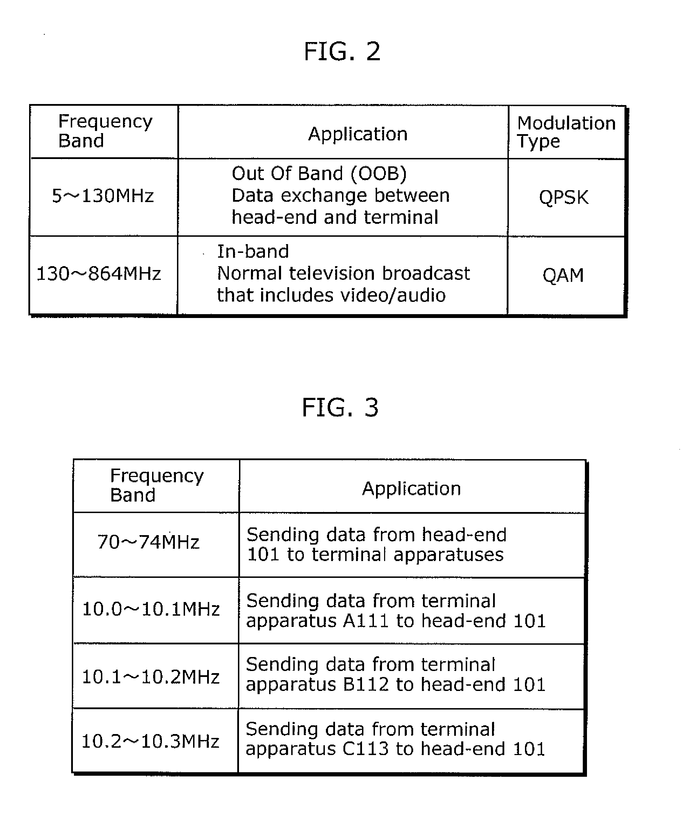

FIG. 2 is a chart showing one example of the division of the frequency bands. The frequency bands can be roughly divided into two types: Out-of-Band (abbr. OOB) and In-Band. 5MHz to 130MHz is assigned as OOB, and is mainly used in data exchange between the broadcast station system 110 and the terminal apparatus A111, the terminal apparatus B112, and the terminal apparatus C113. 130MHz to 864MHz is assigned as In-Band, and is mainly used for broadcasting channels that include video/audio. OOB uses the QPSK modulation type, and In-Band uses the QAM64 or QAM256 modulation type. Modulation type technology is generally known and of little concern to the present invention, and therefore detailed descriptions shall be omitted.

FIG. 3 shows a more specific example of how the OOB frequency bands are used. 70MHz to 74MHz is used to send data from the broadcast station system 101; the terminal apparatus A111, the terminal apparatus B112, and the terminal apparatus C113 each receive the same data from the broadcast station system 101. On the other hand, 10.0MHz to 10.1MHz is used to send data from the terminal apparatus A111 to the broadcast station system 101; 10.1MHz to 10.2MHz is used to send data from the terminal apparatus B112 to the broadcast station system 101; and 10.2MHz to 10.3MHz is used to send data from the terminal apparatus C113 to the broadcast station system 101. Accordingly, it is possible for each terminal apparatus A111, B112, and C113 to send data unique to that terminal to the broadcast station system 101.

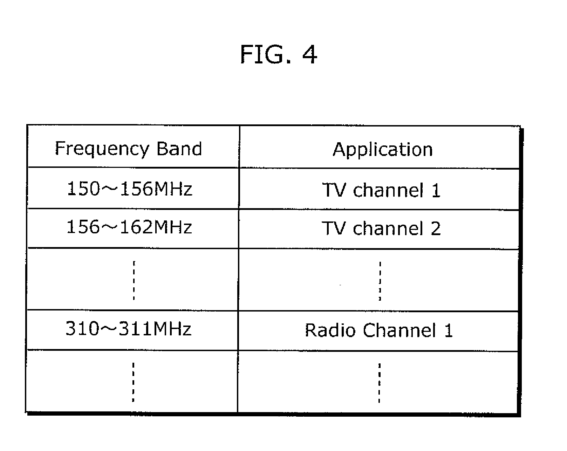

FIG. 4 is a diagram showing one example of use of In-Band frequency bands. 150MHz to 156MHz and 156MHz to 162MHz are assigned to TV channels 1 and 2 respectively, and TV channels are assigned in 6MHz intervals thereafter; radio channels are assigned in 1MHz units from 310MHz on. Each of these channels may be used in analog or digital broadcast. Digital broadcast is sent in TS packet format based the on the MPEG-2 specifications, and in addition to audio and video, it is also possible to send data for various data broadcasting and TV program lineup information for configuring an EPG.

The broadcast station system 101 uses these frequency bands to send an appropriate broadcast signal to the terminal apparatuses, and therefore has a QPSK modulator, a QAM modulator, and so on. In addition, the broadcast station system has a QPSK demodulator for receiving data from the terminal apparatuses. Furthermore, the broadcast station system can be thought of as having various devices related to the modulation units and demodulation unit. However, the present invention relates mainly to the terminal apparatuses, and therefore detailed descriptions of the broadcast station system shall be omitted.

The terminal apparatuses A111, B112, and C113 receive and reproduce a broadcast signal from the broadcast station system 101. In addition, the terminal apparatuses send data unique to each apparatus to the broadcast station system 101. The three terminal apparatuses have the same configuration in the present embodiment.

Note that the present example introduces the details of one example regarding cable system operation, but it is also possible to apply the present invention to a satellite system, a terrestrial broadcast system, or a different kind of cable system as well. As mentioned earlier, both wired/wireless cases exist as a coupling between the broadcast station system and each terminal apparatus in the satellite and terrestrial broadcast systems, and furthermore, the frequency band, frequency interval, modulation system, configuration of the broadcast station system, and so on differ depending on the type and operations of the broadcasting system. However, those have no relation to the present invention, and the present invention is applicable regardless of how they are set as a default.

The broadcast station system 101 modulates an MPEG-2 transport stream and transmits the stream within the broadcast signal. A broadcast reception device receives the broadcast signal, demodulates and reproduces the MPEG-2 transport stream, and from the stream, extracts and uses necessary information. To describe functions of devices and connection structure present within a digital broadcast reception device, the structure of the MPEG-2 transport stream shall first be described in a simple manner.

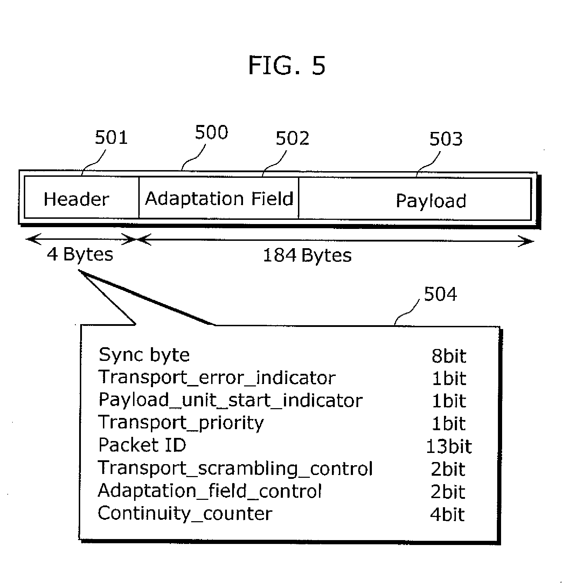

FIG. 5 is a diagram showing the structure of a TS packet. A TS packet 500 has a length of 188 bytes, and is composed of a header 501, an adaptation field 502, and a payload 503. The header 501 holds control information of the TS packet, has a length of 4 bytes, and has the structure shown in 504. In the header 501 there is a field denoted as "Packet ID" (hereafter, PID), and the TS packet is identified based on the value of this PID. The adaptation field 502 holds additional information such as time information. The adaptation field 502 is not mandatory, and there are cases where the adaptation field 502 is not present. The payload 503 holds information carried by the TS packet, such as video, audio, and data used in data broadcast.

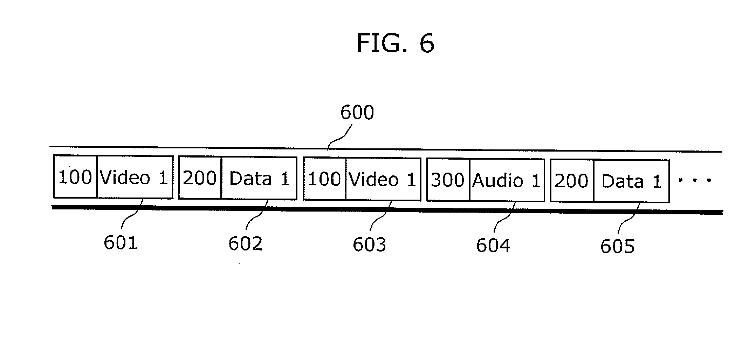

FIG. 6 is a schematic diagram of an MPEG-2 transport stream. A TS packet 601 and a TS packet 603 hold a PID 100 in the header, and hold information regarding video 1 in the payload. A TS packet 602 and a TS packet 605 hold a PID 200 in the header, and hold information regarding data 1 in the payload. A TS packet 604 holds a PID 300 in the header, and holds information regarding audio 1 in the payload.

An MPEG-2 transport stream 600 is configured of concatentated TS packets; for example, the TS packets 601 to 605. The TS packets hold various information, such as video, audio, and data used in data broadcast, in the payload. The broadcast reception device receives the TS packets, and by extracting the information held by each TS packet, reproduces video/audio, as well as using data such as TV program lineup information. Here, TS packets with identical PIDs hold identical kinds of information. Also in FIG. 6, the TS packet 601 and the TS packet 603 both carry information regarding the video 1, and the TS packet 603 and the TS packet 605 both carry information regarding the data 1.

Video and audio are expressed through a format called Packetized Elementary Stream (PES) packets. A PES packet includes video information and audio information of a certain time period, and by receiving PES packets, the broadcast receiving system can output the video/audio information included in those PES packets to a screen/speaker. The broadcasting station transmits the PES packets without pause, and therefore it is possible for the broadcast reception device to continuously reproduce the video/audio without pause. In the case where the PES packet is larger than the payload of one TS packet, the PES packet is divided and stored in the payloads of a plurality of TS packets when it is actually transmitted.

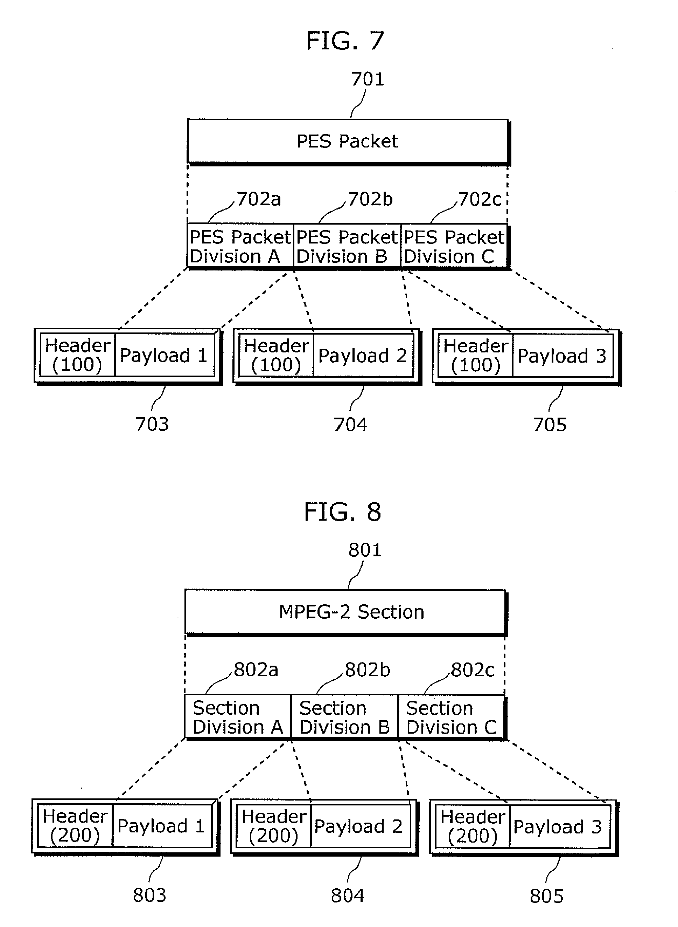

FIG. 7 is a diagram showing an example of division when a PES packet is transmitted. As a PES packet 701 is too large to be stored and carried in the payload of a single TS packet, the PES packet 701 is divided into a PES packet division A 702a, a PES packet division B 702b, and a PES packet division C 702c, and is carried by three TS packets 703 to 705 which have identical PIDs. Note that the PES packet may, depending on operations, carry not only video/audio, but also caption data called subtitles.

Information such as the TV program lineup information and data used in data broadcast is expressed using a format called the MPEG-2 section. In the case where the MPEG-2 section is larger than the payload of one TS packet, the MPEG-2 section is divided and stored in the payloads of a plurality of TS packets when it is actually transmitted.

FIG. 8 is a diagram showing an example of division when the MPEG-2 section is transmitted. As an MPEG-2 section 801 is too large to be stored and carried in the payload of a single TS packet, the MPEG-2 section 801 is divided into a section division A 802a, a section division B 802b, and a section division C 802c, and is carried by three TS packets 803 to 805 which have identical PIDs.

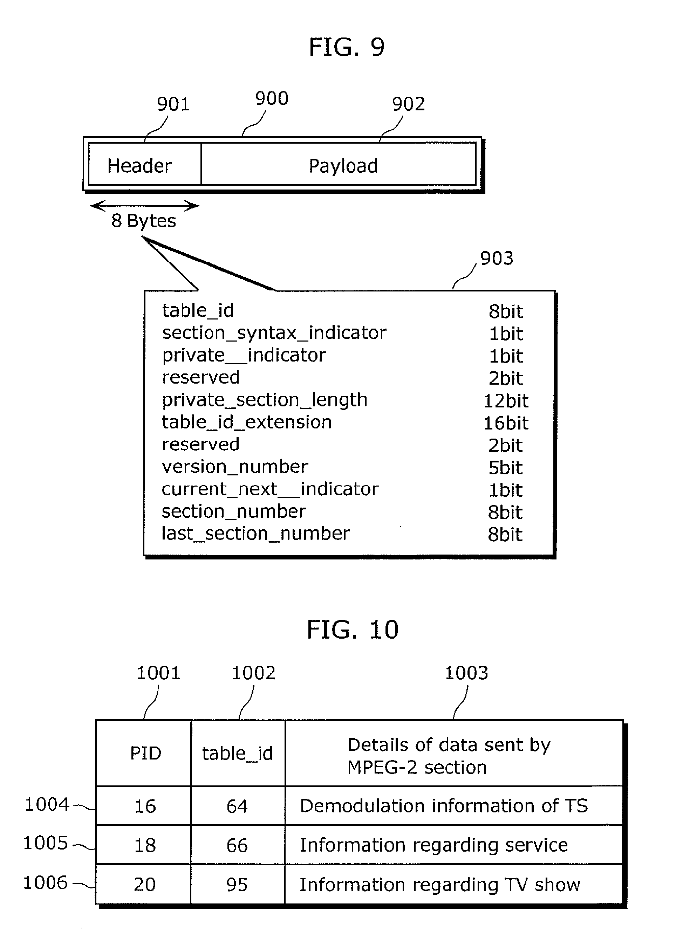

FIG. 9 is a diagram that expresses a structure of the MPEG-2 section. An MPEG-2 section 900 is configured of a header 901 and a payload 902. The header 901 holds control information of the MPEG-2 section. That structure is expressed by a header structure 903. The payload 902 holds data transmitted by the MPEG-2 section 900. A table_id present in the header structure 903 expresses the type of the MPEG-2 section, and a table_id_extension is an extension identifier used when further distinguishing between MPEG-2 sections with identical table_ids. TV program lineup information being transmitted, as in FIG. 10, can be given as an example of use of the MPEG-2 section.

FIG. 10 is a diagram showing an example of a use of the MPEG-2 section when sending the TV program lineup information.

In this example, as written in row 1004, information necessary for demodulating the broadcast signal is denoted in the MPEG-2 section which has a table_id of 64 in the header structure 903; furthermore, this MPEG-2 section is carried by a TS packet with a PID of 16.

Among the TS packet strings present in the MPEG-2 transport stream, partial TS packet strings, in which only elements having identical PIDs are extracted, are called Elementary Streams (ESs). For example, in FIG. 7, the TS packets 703 to 705, in which the PES packet 701 is divided and carried, all are identified by a PID of 100. It can be said that this is an ES which carries the PES packet 701. In the same manner, in FIG. 8, the TS packets 803 to 805, in which the MPEG-2 section 801 is divided and carried, all are identified by a PID of 200. It can be said that this is an ES which carries the MPEG-2 section 801.

A concept called a program further exists in MPEG-2 transport stream. The program is expressed as a collection of ESs, and is used in the case of handling a plurality of ESs all together. When the program is used, it is possible to handle video/audio, as well as accompanying data for use in data broadcast, all together. For example, in the case where video/audio to be reproduced simultaneously are handled all together, by gathering the ES which transmits a PES packet that includes video and the ES which transmits a PES packet that includes audio, the broadcast reception device simultaneously reproduces the two ESs.

To express the program, two tables, called a Program Map Table (PMT) and a Program Association Table (PAT), are used in MPEG-2. Detailed descriptions can be found in the specifications of ISO/IEC 13818-1, "MPEG-2 Systems." The PMT and the PAT shall be described hereafter in simple terms.

The PMT is a table included in the MPEG-2 transport stream, the number of which is equivalent to the number of programs. The PMT is configured as an MPEG-2 section, and has a table_id of 2. The PMT holds a program number used in identifying the program and additional information of the program, as well as information regarding an ES belonging to the program.

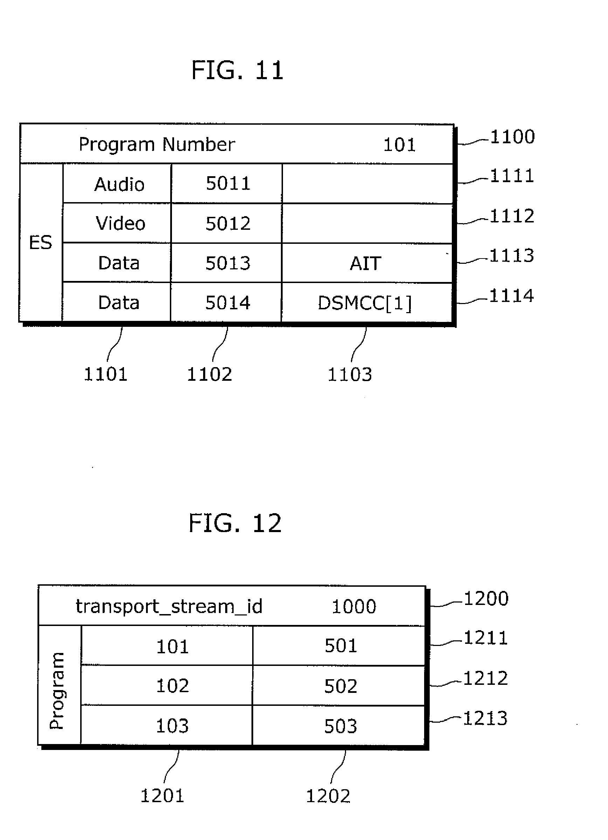

FIG. 11 is a diagram showing an example of the PMT.

A program number 1100 is assigned uniquely to programs in the same transport stream, and is used in identifying the PMT. Rows 1111 to 1114 represent information regarding individual ESs. A column 1101 is a type of ES, in which "video", "audio", "data", and so on are specified. Column 1102 is the PIDs of the TS packets that make up the ES. Column 1103 is additional information regarding the ES. Therefore, for example, the ES shown in row 1111 is an ES which carries an audio PES packet, and is configured of TS packets with a PID of 5011.

The PAT is a table present in the MPEG-2 transport stream, of which there is only one. The PAT is configured as an MPEG-2 section, has a table_id of 0, and is carried by a TS packet with a PID of 0. The PAT holds a transport_stream_id used in identifying the MPEG-2 transport stream, and information regarding all PMTs that express programs present in the MPEG-2 transport stream.

FIG. 12 is a diagram showing an example of the PAT.

A transport_stream_id 1200 is used in identifying the MPEG-2 transport stream. Rows 1211 to 1213 express information regarding the program. Column 1201 is the program number. Column 1202 is the PID of the TS packet which carries the PMT corresponding to the program. Therefore, for example, the PMT of the program shown in row 1211 has a program number of 101, and the corresponding PMT is carried by the TS packet with a PID of 501.

In the broadcast reception device, when a user gives an instruction to reproduce video/audio belonging to a program, reproduction of the specified video/audio is executed using the PAT and PMT. For example, the following procedure is followed when reproducing video/audio belonging to the program with a program number of 101, in regards to the MPEG-2 transport stream that carries the PAT in FIG. 12 and the PMT in FIG. 11. First, a PAT transmitted as an MPEG-2 section with a table_id of "0" is acquired from a TS packet with a PID of "0". The PAT is searched for a program with the program number "101" and row 1211 is obtained. From row 1211, the PID "501", of the TS packet which carries the PMT of the program with a program number "101", is obtained. Next, the PMT transmitted as the MPEG-2 section with a table_id of "2" is acquired from the TS packet with the PID of "501". Row 1111, which is audio ES information, and row 1112, which is video ES information, are obtained from the PMT. From row 1111, a PID "5011" of the TS packets which make up an ES that carries an audio PES packet is obtained. In addition, from row 1112, a PID "5012" of the TS packets which make up an ES that carries a video PES packet is obtained. Next, an audio PES packet is acquired from the TS packet with a PID "5011", and a video PES packet is acquired from the TS packet with a PID of "5012". Through this procedure, it is possible to isolate the video/audio PES packets to be reproduced, and thus the video/audio carried by these packets can be reproduced.

Thus far, simple descriptions have been given regarding MPEG-2 specifications, and hereafter, detailed definitions of terms shall be given. In the present invention, there are two types of the term "program." One is a "program" which appears in the MPEG-2 specifications and refers to a TV program, and the other is a "program" referring to an assemblage of code executed by a CPU. As the former is synonymous with the term "service" used in the operational standards, hereafter, to avoid confusion, the former shall be called "service," and the latter simply "program." Furthermore, concerning the latter, a "program" particularly written in the Java^{™} language is called a "Java^{™} program." In addition, as the term "channel," which generally refers to the video/audio/data that the broadcast reception device reproduces simultaneously, in synonymous with "service," it too shall be referred to as "service."

Here, a brief description shall be given regarding Service Information (SI). As described earlier, the SI has differing transmission methods, differing formats, and differing SI tables, depending on the region, the broadcasting format, and so on.

Here, descriptions shall be given using the SCTE-SI used in the United States cable system as an example. SCTE-SI is defined in the SCTE-SI specifications ANSI/SCTE 65 (DVS234). The SCTE-SI specifications define nine SI tables, and define many descriptors for describing even more detailed information. With SCTE-SI, the service has a unique source ID through which it is managed. Moreover, each service has a channel number, which is used in the EPG to identify the service. As previously mentioned, with SCTE-SI, there are two types of methods through which to express information regarding a service; one method uses three SI tables, or NIT, NTT, and SVCT, and the other uses LVCT. The respective methods shall be described briefly hereafter.

The NIT holds tuning information necessary when tuning the MPEG-2 transport stream that send each service. The NIT has two subtables: an NIT-CDS (Carrier Definition Subtable), which expresses a frequency at which the MPEG-2 transport streams in which each service is carried are broadcast; and an NIT-MMS (Modulation Mode Subtable), which expresses a modulation type and bitrate information at the time of broadcasting MPEG-2 transport streams in which each service is carried.

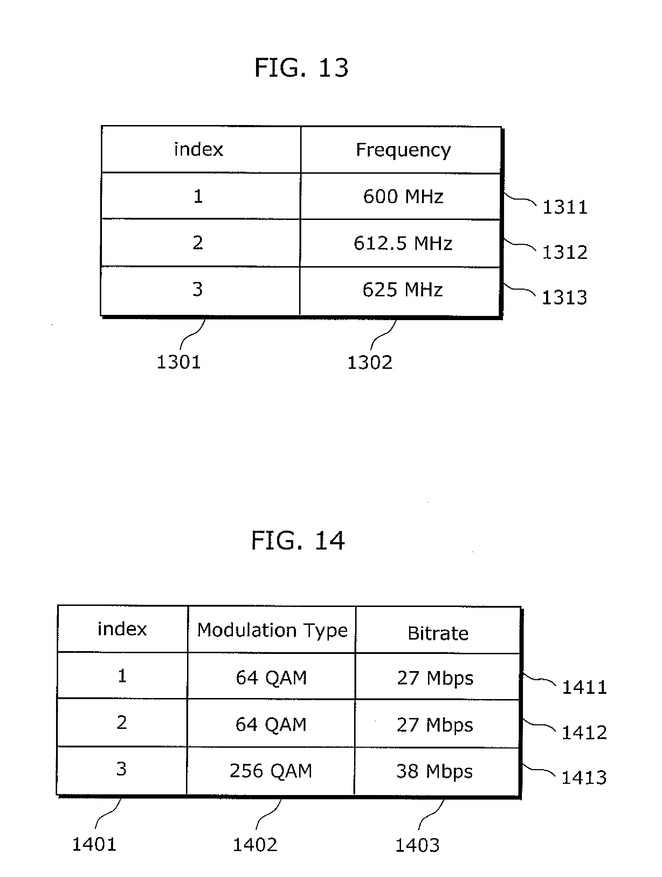

FIG. 13 is a diagram showing an example of the NIT-CDS. The NIT-CDS expresses frequencies. Rows 1311 to 1313 show types of frequencies, and columns 1301 and 1302 show frequency indexes and frequencies, respectively. Each frequency is managed by the index denoted in column 1301.

FIG. 14 is a diagram showing an example of NIT-MMS. NIT-MMS expresses tuning information aside from frequencies. Rows 1411 to 1413 show each type of tuning information, and columns 1401, 1402, and 1403 show a physical data information index, a modulation type, and a bitrate, respectively. Note that with the SCTE-SI specifications, there are many types of tuning information aside from modulation type and bitrate, but because these individual types of tuning information have no relation to the present invention, they have been omitted from the descriptions and from FIG. 14. Each piece of tuning information denoted in the NIT-MMS is managed by the index denoted in column 1401.

The NTT holds a name of each service.

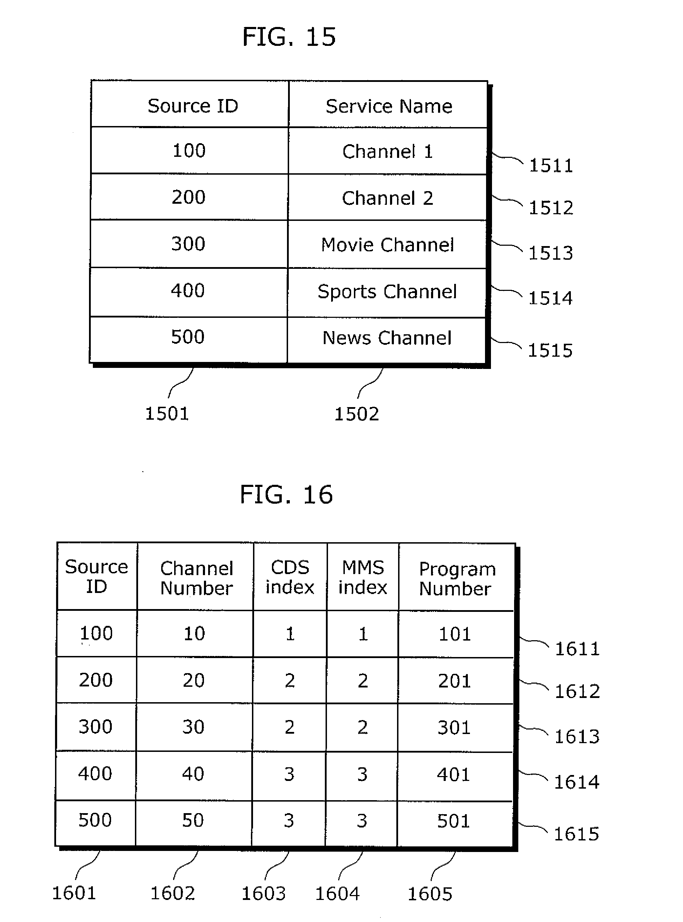

FIG. 15 is a diagram showing an example of the NTT. Rows 1511 to 1515 show types of services, and columns 1501 and 1502 show source IDs and service names, respectively. In SCTE-SI, services are uniquely isolated through source IDs, which are equivalent to service data identifiers. The NTT also has a source ID field in column 1501, which is equivalent to the service data identifier, and each service ID and service name are associated.

The SVCT holds link information, including various attributes such as channel numbers of services, which PMT in the MPEG-2 transport stream the service is associated with, and so on. The SVCT has three subtables. An SVCT-DCM (Defined Channel Map) defines the channel numbers of all services present; an SVCT-ICM (Inverse Channel Map) associates the channel numbers and source IDs of all services present; and an SVCT-VCM (Virtual Channel Map) holds attribute information, channel numbers, link information, source IDs corresponding to service data identifiers, and the like for all services present. The most important of the above three subtables is the SVCT-VCM. The information in the other two subtables is information for making it easier to search the information denoted in the SVCT-VCM, and therefore the SVCT-VCM in particular shall be described here.

FIG. 16 is a diagram showing an example of the SVCT-VCM. Rows 1611 to 1615 show types of services. Column 1601 shows the source ID of each service, and columns 1602 to 1605 show channel numbers, CDS_indexes, MMS_indexes, and program numbers, respectively. In actuality, the SVCT-VCM holds many pieces of attribute information not shown in FIG. 16, but these have no relation to the present invention and thus shall be omitted.

As shown in FIG. 16, each service denoted in each SVCT-VCM has the CDS_index shown in column 1603 and the MMS index shown in column 1604. These are associated with the indexes present in the NIT-CDS shown in FIG. 13 and the NIT-MMS shown in FIG. 14, respectively. In addition, the source IDs shown in column 1601 are equivalent to the source IDs in column 1501 of the NTT shown in FIG. 15. Therefore, the broadcast reception device replaces the information of the CDS-index 1603 in FIGS. 13 and 16 with frequency data corresponding to the index 1301, which has the same values as the CDS-index 1603; replaces the MMS-index 1604 in the tables shown in FIGS. 14 and 16 with modulation type and bitrate data corresponding to the index 1401, which has the same values; and in the tables shown in FIGS. 15 and 16, supplies data corresponding to the source ID 1601, which has the same value as the source ID 1501. Through this, the broadcast reception device obtains the service list (main service-list).

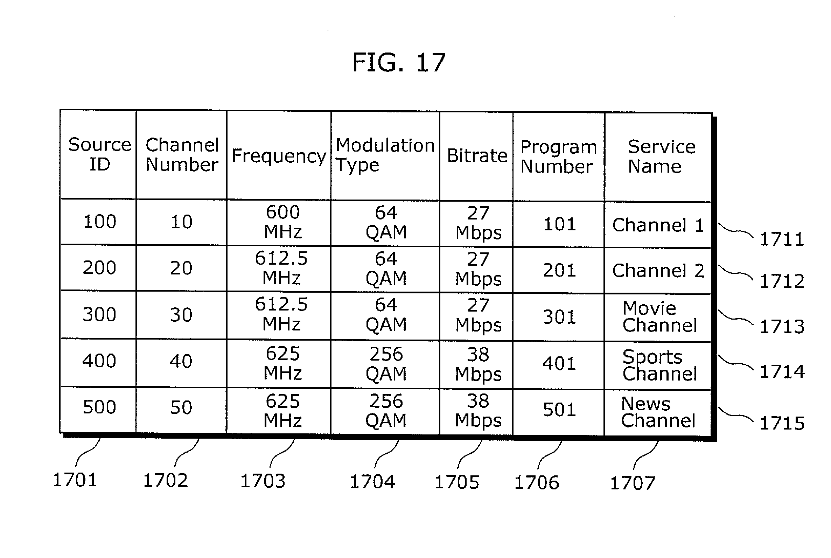

FIG. 17 is a diagram showing an example of a service list created by the broadcast reception device.

Rows 1711 to 1715 show information indicating types of services (service data). Rows 1701 to 1707 show, in order, source IDs, channel numbers, frequencies, modulation types, bitrates, program numbers, and service names.

By storing a service list such as is shown in FIG. 17, a digital broadcast reception device can immediately use information denoted in the service list when displaying the EPG.

On the other hand, the LVCT already includes a service list that corresponds to that shown in FIG. 17, created using the NIT, NTT, and SVCT. Thus, it is not necessary to acquire the plural tables and subtables shown in FIGS. 13 to 16 and combine the information denoted therein, as is the case when using the NIT, NTT, and SVCT to construct the service list; on the contrary, it is possible to construct a service list such as is shown in FIG. 17 by acquiring only the LVCT and converting the format. In other words, the broadcast reception device according to the present embodiment acquires mutually different types of SI, or SI indicated by the NIT, NTT, and SVCT, and SI indicated by the LVCT. Note that there are cases where the three subtables, or NIT, NTT, and SVCT, and the LVCT are sent at the same time, as well as cases where they are sent at different times.

Note that in the SCTE-SI specifications described here, all information contained in each SI table is not denoted in the diagrams; each SI table holds and enormous amount of very detailed information. However, the essence of the present invention has no relation to the individual detailed pieces of information, and thus descriptions shall hereby be omitted. Those pieces of information may be managed within the actual service list managed by the digital broadcast reception device. In addition, the items included in the service list shown in FIG. 17 do not necessarily have to be denoted and managed within the service list. Items not used by the digital broadcast reception device do not have to be denoted, and the present invention is applicable in such a case as well.

Thus far, descriptions of SCTE-SI have been given; however, as previously mentioned, in the United States cable broadcast environment, In-band and OOB frequencies are used. Digital broadcast reception devices that operate in the United States cable broadcast environment can acquire In-band and OOB information simultaneously. In general, In-band includes information which requires a high bitrate for transmission, such as video and audio; OOB sends additional information that can be sent at a low bitrate. The specifications prescribe that the SCTE-SI is transmitted OOB, and the digital broadcast reception device acquires the SCTE-SI OOB and constructs a combined service list.

However, in the United States cable environment, there are cases where the SI is transmitted In-band using a format called PSIP, in addition to the SCTE-SI transmitted OOB. Like the SCTE-SI, PSIP uses the LVCT to express service information. In other words, a case can be considered in which the LVCT flowing In-band and the LVCT of the SCTE-SI flowing OOB are acquired simultaneously.

Note that the descriptions provided above mainly concern how to handle the information regarding the "service" in the SCTE-SI; however, as information used in the EPG and the like, there is information concerning attributes of the "TV program" itself. This information includes, for example, the title, broadcast time, content, genre, featured actors, and so on of the TV program. The SI specifications used in a each region and each form of broadcasting, represented by SCTE-SI, prescribe not only the information related to the service, but also a format of the SI table in which the information regarding the TV program is denoted. For example, an Event Information Table (EIT) and an Event Text Table (ETT) are prescribed in SCTE-SI, and transmit attribute information of the TV program, information of the details of the TV program, and so on. In the same manner as the "service list" for managing the "service," a "TV program management chart" for managing the "TV program" is constructed from those tables, and is used by programs within the digital broadcast reception device. However, the present invention is primarily concerned with managing the information regarding the service, and thus a method for managing the information regarding the TV program shall not be described. The present invention is applicable regardless of how the TV program management chart is realized.

Description has been given regarding several kinds of information specified in the MPEG-2 specifications and the SI specifications according to the present invention. Hereafter, a hardware configuration prerequisite to the embodiments of the present invention is described. Here, the United States cable environment shall be given as an example.

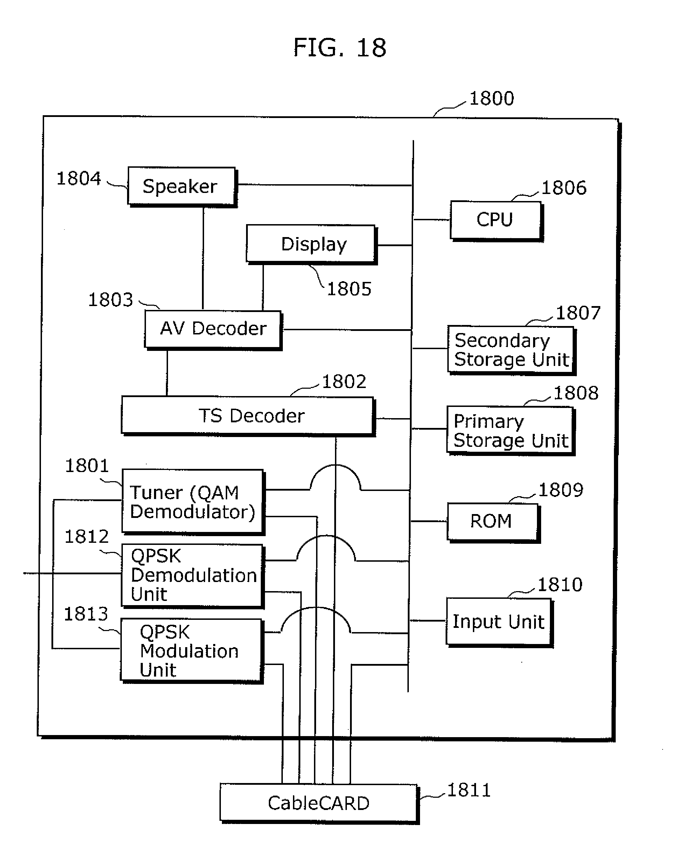

FIG. 18 is a block diagram showing a hardware configuration of a broadcast reception device (terminal apparatus) used in the United States cable system. This broadcast reception device (terminal apparatus) 1800 corresponds to the terminal apparatuses A111, B112, and C113, and includes a QAM demodulator 1801, a TS decoder 1802, an AV decoder 1803, a speaker 1804, a display 1805, a CPU 1806, a secondary storage unit 1807, a primary storage unit 1808, a ROM 1809, an input unit 1810, a CableCARD 1811, a QPSK demodulator 1812, and a QPSK modulator 1813.

The QAM demodulator 1801 is a device which demodulates a broadcast signal modulated in the broadcast station system 101 and transmitted, in accordance with physical data information for tuning, including a frequency prescribed by the CPU 1806. As the QAM modulation type is a generally-known technology, detailed descriptions shall be omitted.

The TS decoder 1802 is a device which has a function to separate PES packets and MPEG-2 sections which comply with specified conditions from the MPEG-2 transport stream, based on a PID, a section filter condition, and so on prescribed by the CPU 1806. The PES packets separated by the TS decoder 1802 are transferred to the AV decoder 1803. In addition, the MPEG-2 section separated by the TS decoder 1802 is Direct Memory Access (DMA) transferred to the primary storage unit 1808, and is used by the program executed by the CPU 1806.

The AV decoder 1803 is a device with a function to decode encoded video and audio. An AV signal obtained from the decoding performed by the AV decoder 1803 is sent to the speaker 1804 and the display 1805. Note that there are cases where the AV decoder 1803 cannot decode the video and audio simultaneously. The AV decoder 1803 may exist as separate video decoders and audio decoders. Note that there are cases where the AV decoder 1803 has a function for decoding subtitle data. The speaker 1804 and display 1805 are devices with functions for outputting audio and video respectively, which has been sent from the AV decoder 1803.

The CPU 1806 executes the program that operates in the broadcast reception device. There are cases where the program executed by the CPU 1806 is i) included in the ROM 1809; ii) downloaded from a broadcast signal, a network, and so on and held in the primary storage unit 1808; iii) downloaded from a broadcast signal, a network, and so on and held in the secondary storage unit 1807; and so on. The CPU 1805 controls QAM demodulator 1801, TS decoder 1802, AV decoder 1803, speaker 1804, display 1805, secondary storage unit 1807, primary storage unit 1808, ROM 1809, input unit 1810, QPSK demodulator b112 and QPSK modulator b113 in accordance with instructions from the executed program.

The secondary storage unit 1807 is a non-volatile memory such as a flash-ROM, a Hard Disk Drive (HDD), a CD-R(W), a writable DVD or Blu-ray Disc (BD), a rewritable medium such as a solid-state memory, or the like, which continues to hold information regardless of whether power to the terminal apparatus 1800 is supplied or turned off, and which saves/deletes information stored based on an instruction from the CPU 1806. The secondary storage unit 1807 is used to save data too important to be lost when power to the terminal apparatus 1800 is turned off (for example, a program downloaded by the digital broadcast reception device via the broadcast signal to be used even after power is turned off and resupplied, a main service-list or an SI table stored prior to power being turned off, and so on).

The primary storage unit 1808 is configured of a RAM or the like, and is a device with a function to temporarily save information in accordance with instructions from the CPU 1806 or a DMA-compatible device, only when power is being supplied (an SI table acquired via a broadcast signal while power is being supplied, a main service-list acquired prior to power being turned off, an SI table (read out from the secondary storage unit 1807 when power is supplied) and so on). The information held in the primary storage unit 1808 is deleted when power to the terminal apparatus 1800 is turned off.

The ROM 1809 is a non-rewriteable memory device; to be more specific, the ROM 1809 is configured of, for example, a ROM or Compact Disk Read-Only Memory (CD-ROM), a Digital Versatile Disk Read-Only Memory (DVD-ROM), a Blu-ray Disk Read-Only Memory (BD-ROM), or the like. A program executable by the CPU 1806 is stored in the ROM 1809.

The input unit 1810 is, to be more specific, configured of a front panel or a remote control, and accepts an input from the user.

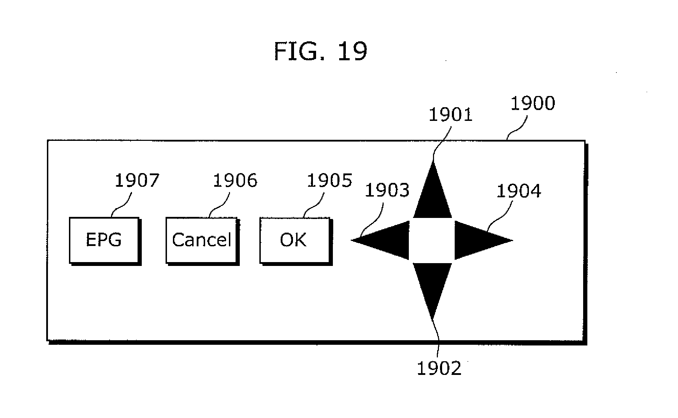

FIG. 19 is a diagram showing an example of a case where the input unit 1810 is configured of the front panel. A front panel 1900 has seven buttons: an up cursor button 1901, a down cursor button 1902, a left cursor button 1903, a right cursor button 1904, an OK button 1905, a Cancel button 1906, and an EPG button 1907. When the user presses a button, the CPU 1806 is notified of an identifier of the pressed button.

The CableCARD 1811 has functions for descrambling the MPEG-2 transport stream sent In-band and for sending and receiving information OOB. The CableCARD specifications can be seen in the "OC-SP-CC-IF" specifications. Here, a simple description of the CableCARD shall be given. The CableCARD 1811 is in a card form, and is an attachable/detachable device that uses a Personal Computer Memory Card International Association (PCMCIA) interface to connect to the terminal apparatus 1800. PCMCIA is generally-known technology and thus descriptions shall be omitted. When connected to the terminal apparatus 1800, the CableCARD 1811 is inputted with an In-band MPEG-2 transport stream from the QAM demodulator 1801, and outputs an In-band MPEG-2 transport stream, in which the service specified by the CPU 1806 has been descrambled, to the TS decoder 1802. Moreover, in the United States cable system, various information is transmitted in inbound and outbound directions OOB. At this time, because the format of the information which the broadcast station system 101 sends to the terminal apparatus differs from the format of information readable by the terminal apparatus 1800, information transfer is impossible as-is. The CableCARD 1811 includes a device which carries out format conversion on the inbound and outbound information transmitted OOB. The information transmitted OOB is QPSK-modulated. As this modulation type is a generally-known technology, detailed descriptions shall be omitted. The terminal apparatus includes a QPSK demodulator 1812 and a QPSK modulator 1813. The CPU 1806 controls not only devices inside the terminal apparatus 1800, but can control devices inside the CableCARD 1811 as well.

Regarding receipt of inbound information, first, the QPSK demodulator 1812 demodulates an incoming signal sent OOB from the broadcast station system 101, and inputs the generated bit stream into the CableCARD 1811. The CableCARD 1811 extracts information prescribed by the CPU 1806 from the various information included in the bit stream, converts the information into a format readable by a program operated in the CPU 1806, and presents the information to the CPU 1806.

Regarding outbound sending of information from the terminal apparatus 1800, first, the CPU 1806 sends, to the CableCARD 1811, information to be sent to the broadcast station system 101. The CableCARD 1811 converts the information inputted from the CPU 1806 to be readable by the broadcast station system 101, and sends the information to the QPSK modulator 1813. The QPSK modulator 1813 QPSK-modulates the information inputted from the CableCARD 1811, and sends the information to the broadcast station system 101.

Note that in FIG. 18, the display 1805 and the speaker 1804 are represented as being contained within the broadcast reception device, but there also exists a type in which the AV signal alone is outputted to the exterior, without the display 1805 and the speaker 1804 being contained in the broadcast reception device. Where the display 1805 and the speaker 1804 are present has no relationship to the present invention, which is applicable regardless of which type is used. In addition, in FIG. 18, only one each of the QAM modulator 1801 and the AV decoder 1803 are present within the terminal apparatus 1800, but there is also a hardware configuration in which a plurality of each of these devices appearing in FIG. 18 are present, and the present invention is applicable even in such a case.

Thus far, descriptions have been given regarding hardware configuration examples of the present invention, but hereafter, descriptions regarding program operation processes in the terminal apparatus shall be given.

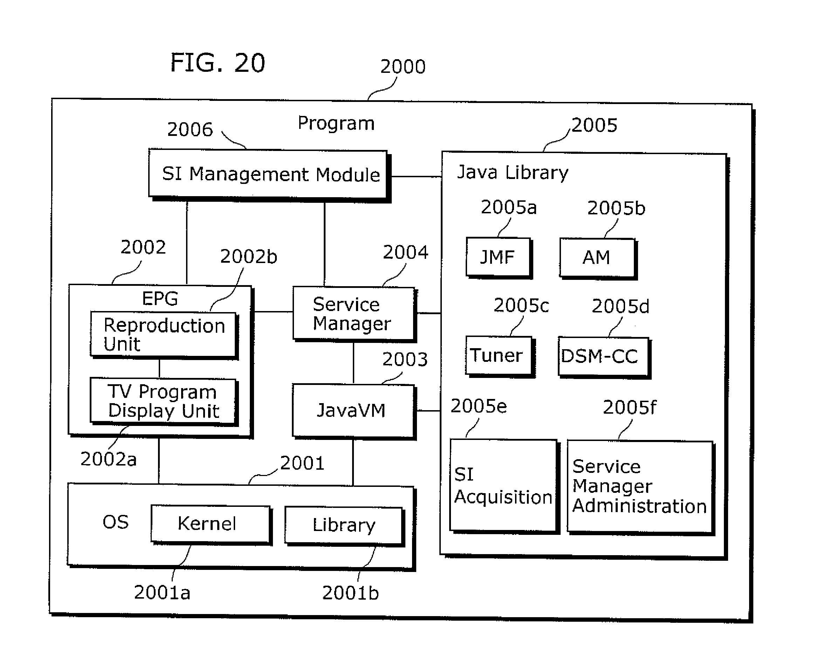

FIG. 20 is a diagram showing an example of the configuration of a program stored in the ROM 1809 and executed by the CPU 1806. This example assumes a terminal compliant with the OpenCable Application Protocol (OCAP) specification used in United States cable broadcast terminals. OCAP is a specification developed as part of the OpenCable specification group, which is the cable broadcast standard developed by CableLabs, a United States cable broadcast environment consortium, and is a specification for executing a Java^{™} program in a digital broadcast reception device. Details are written in the OC-SP-OCAP 1.0 specification in the OCAP specification.

A program 2000 is configured of a plurality of sub-programs; more specifically, is configured of an OS 2001, an EPG 2002, a Java^{™} VM 2003, a service manager 2004, a Java^{™} library 2005, and an SI management module 2006.

The OS 2001 is a sub-program which the CPU 1806 starts when power is supplied to the terminal apparatus 1800. The OS of the OS 2001 is short for "operating system"; examples are Linux^{™}, Windows^{™}, and so on. The OS 2001 is a generic, commonly-known technology configured of a kernel 2001a and a library 2001b which concurrently execute other programs, and therefore detailed descriptions shall be omitted. In the present embodiment, the kernel 2001a of the OS 2001 executes the EPG 2002 and the Java^{™} VM 2003 as sub-programs. In addition, the library 2001b provides these sub-programs with a plurality of functions for controlling constituent elements held in the terminal apparatus 1800.

A tuning function can be introduced as one example of these functions. With the tuning function, tuning information including a frequency is received from another subprogram and then passed over to the QAM demodulator 1801. The QAM demodulator 1801 carries out demodulation based on the provided tuning information, and can pass the demodulated MPEG-2 transport stream to the TS decoder 1802. As a result, the other subprograms can control the QAM demodulator 1801 via the library 2001b.

The SI management module 2006 acquires, monitors, and stores broadcasted SI tables, and constantly provides the latest correct service list and TV program management chart to other subprograms. The SI management module 2006 is started by the kernel 2001a when power is supplied to the terminal apparatus 1800. The operation of the SI management module 2006 is an essential part of the present invention, and thus detailed descriptions shall be provided later.

The EPG 2002 is configured of a TV program display unit 2002a, which displays a TV program list to a user and accepts input from the user, and a reproduction unit 2002b, which carries out service selection. Here, EPG stands for Electric Program Guide. The EPG 2002 is started by the kernel 2001a when power is supplied to the terminal apparatus 1800. Within the started EPG 2002, the TV program display unit 2002a waits for input from a user via the input unit 1810 of the terminal apparatus 1800. Here, in the case where the input unit 1810 is configured of the front panel shown in FIG. 19, when the user presses an EPG button 1907 of the input unit 1810, the CPU 1806 is notified of an identifier of the EPG button. The TV program display unit 2002a of the EPG 2002, which is a subprogram operated by the CPU 1806, accepts this identifier; acquires, from the SI management module 2006, the service list and the TV program management chart not shown in the diagrams (a table for managing time information associated with information for specifying each service, such as the channel number, service name, source ID, and so on of the service list, and TV program information corresponding to the time information); and displays necessary information in the display 1805.

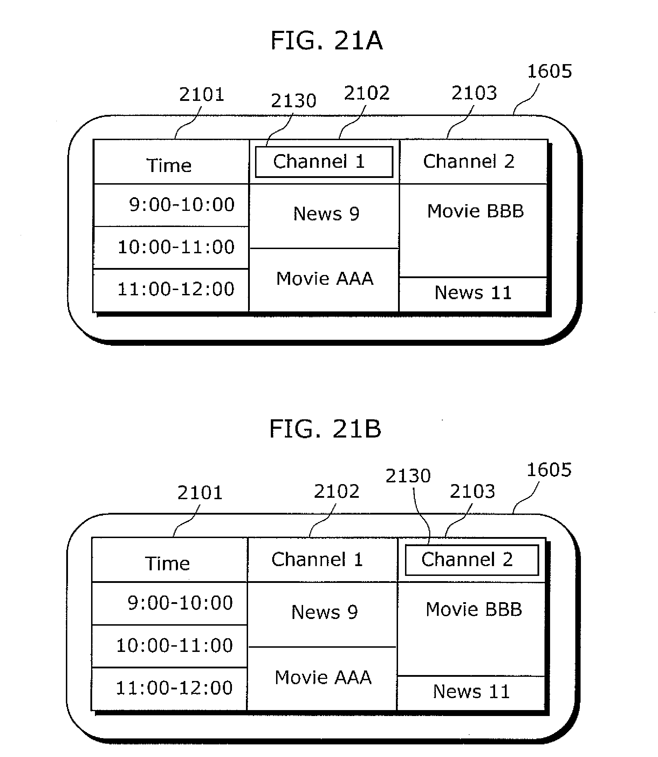

FIGS. 21A and 21B are examples of TV program charts displayed in the display 1605. Referring to FIG. 21A, the TV program information is displayed in a grid in the display 1805. Time information is displayed in column 2101. A channel name "Channel 1" and a TV program shown during a time period corresponding to the time in column 2101 are displayed in column 2102. On "'Channel 1", a TV program "News 9" is shown from 9:00 to 10:30, and "Movie AAA" is shown from 10:30 to 12:00. In the same manner as column 2102, the service name "Channel 2" and a TV program shown during a time period corresponding to the time in column 2101 is displayed in column 2103. A TV program "Movie BBB" is shown from 9:00 to 11:00, and "News 11" is shown from 11:00 to 12:00. The cursor 2130 moves when the left cursor 1903 and the right cursor 1904 on the front panel 1900 are pressed. When the right cursor 1904 is pressed in the state shown in FIG. 21A, the cursor 2130 moves to the right, and the diagram becomes as shown in FIG. 21B. In addition, when the left cursor 1903 is pressed in the state shown in FIG. 21B, the cursor 2130 moves to the left, and the diagram becomes as shown in FIG. 21A.

When the OK button 1905 on the front panel 1900 is pressed in the state shown in FIG. 21A, the TV program display unit 2002a notifies the reproduction unit 2002b of the identifier for "Channel 1". Meanwhile, when the OK button 1905 on the front panel 1900 is pressed in the state shown in FIG. 21B, the program display unit 2002a notifies the reproduction unit 2002b of the identifier for "Channel 2".

The reproduction unit 2002b uses the received service identifier and reproduces the video and audio present in that service. The relationship between the service identifier and the service can be derived from the SI. For example, in the case where the combined service list managed by the SI management module 2006 is as shown in FIG. 17, and when, for example, the channel number "10" is specified as the service identifier, it can be seen that the frequency of the MPEG-2 transport stream that carries the PMT associated with that service is "600 MHz", the modulation type is "64 QAM", and the bitrate is "27 Mbps"; thus, that MPEG-2 transport stream can be received by performing tuning using the QAM demodulator 1801. Furthermore, it can also be deduced that the PMT within this MPEG-2 transport stream with a program number of "101" expresses that service. In order to carry out reproduction of the service, the reproduction unit 2002b provides the accepted service identifier as-is to the service manager 2004. Note that any value may be used for the service identifier as long as it can uniquely isolate a service in the table. For example, in FIG. 17, the value of any column, such as the source ID or the service name, may be used. In addition, in the case where different information is denoted in the service list, that information may be used as well. In the present embodiment, descriptions shall be provided assuming the channel number is used as the channel identifier.

In addition, when the user presses the up cursor 1901 and the down cursor 1902 of the front panel 1900 during reproduction, the reproduction unit 2002b accepts, from the input unit 1810 and via the CPU 1806, a notification that the cursor was pressed, and changes the channel being reproduced.

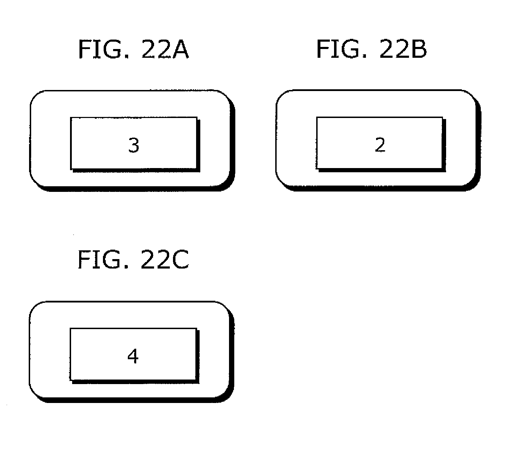

FIGS. 22A to 22C are diagrams showing examples of service identifiers stored in the primary storage unit 1808.

First, the reproduction unit 2002b stores the channel identifier of the channel currently being reproduced in the primary storage unit 1808. In FIG. 22A, a service identifier of "30" is stored, and referring to the service list in FIG. 17, this indicates that the service with a service name "Movie Channel" is being reproduced. When the user presses the up-cursor 1901 in the state shown in FIG. 22A, the reproduction unit 2002b refers to the service list shown in FIG. 17, and passes the identifier "20" of a service with a service name of "Channel 2" to the service manager 2004 in order to switch to reproduction of the service with the service name of "Channel 2", which is the previous channel in the table. At the same time, the service identifier stored in the primary storage unit 1808 is re-written as "20". FIG. 22B shows the state in which the service identifier has been re-written. Moreover, when the user presses the down cursor 1902 in the state shown in FIG. 22A, the reproduction unit 2002b refers to the service list shown in FIG. 17, and passes the identifier "40" of a service with a service name of "Sports Channel" to the service manager in order to switch to reproduction of the service with the service name of "Sports Channel", which is the next channel in the table. At the same time, the channel identifier stored in the primary storage unit 1808 is re-written as "40". FIG. 22C shows a state in which the channel identifier has been re-written.

The Java^{™} VM 2003 is a Java^{™} virtual machine which sequentially analyzes and executes programs written in the Java^{™} language. Programs written in the Java^{™} language are compiled of intermediate code which does not depend on the hardware, called bytecode. The Java^{™} virtual machine is an interpreter which executes this bytecode. In addition, some Java^{™} virtual machines translate bytecode into an execution format understandable by the CPU 1806, pass the code to the CPU 1806, and execute the code. The Java^{™} VM 2003 is started, the Java^{™} program to be executed being specified by the kernel 2001a. In the present embodiment, the kernel 2001a specifies the service manager 2004 as the Java^{™} program to execute. Details of the Java^{™} language are explained in many publications, such as "Java^{™} Language Specification" (ISBN 0-201-63451-1). Here, those details shall be omitted. In addition, detailed operations of the Java^{™} VM itself are explained in many publications, such as "Java^{™} Virtual Machine Specification" (ISBN 0-201-63451-X). Here, those details are omitted.

The service manager 2004, which is a Java^{™} program written in the Java^{™} language, is sequentially executed by the Java^{™} VM 2003. The service manager 2004 can call or be called by other subprograms not written in the Java^{™} language through a Java^{™} Native Interface (JNI). JNI is described in many publications, such as "Java^{™} Native Interface." Here, those details shall be omitted.

The service manager 2004 accepts the service identifier from the reproduction unit 2002b, through the JNI.

The service manager 2004 first passes the service identifier to the Tuner 2005c within the Java^{™} library 2005, thereby requesting tuning. The Tuner 2005c refers to the service list managed by the SI management module 2006 in the primary storage b108 or the secondary storage b107 (main service-list), and obtains tuning information. At this time, when the service manager 2004 passes the service identifier "10" to the Tuner 2005c, the Tuner 2005c refers to row 1711 in FIG. 17, and obtains the frequency "600 MHz", the modulation type "64 QAM", and the bitrate "27 Mbps", which are the corresponding tuning information. The Tuner 2005c passes the tuning information to the QAM demodulator 1801 via the library 2001b of the OS 2001. The QAM demodulator 1801 demodulates the signal sent from the broadcast station system 101 in accordance with the provided tuning information, and passes the resultant to the TS decoder 1802.

Next, the service manager 2004 supplies the service identifier to the JMF 2005a within the Java^{™} library 2005, and requests reproduction of the video/audio.

First, the JMF 2005a acquires, from the PAT and PMT, the PID for isolating the video and audio to be reproduced. As the JMF 2005a acquires the PAT, the JMF 2005a specifies the PID "0" and the CPU 1806 to the TS decoder 1802, through the library 2001b of the OS 2001. The TS decoder 1802 performs filtering with the PID "0" and the table_id "0", and by passing these to the CPU 1806 via the primary storage unit 1808, the JMF 2005a acquires the PAT. Here, FIG. 12 is given as an example of the PAT. At this time, when the service identifier supplied to the JMF 2005a is "10", the JMF 2005a refers to row 1711 of FIG. 17, acquires the corresponding program number "101", and then refers to row 1211 of the PAT in FIG. 12, and acquires the PID "501" which corresponds to the program number "101". In order to acquire the PMT, the JMF 2005a specifies the PID acquired from the PAT and a table_id of "2" to the TS decoder 1802 via the library 2001b of the OS 2001. Here, the specified PID is "501". The TS decoder 1802 performs filtering with the PID "501" and the table_id "2," and by passing these to the CPU 1806 via the primary storage unit 1808, the JMF 2005a collects the PMT. Here, FIG. 11 can be given as an example of the PMT. The JMF 2005a acquires, from the PMT, the PID of the video and audio to be reproduced. Referring to FIG. 11, the JMF 2005a acquires an audio PID "5011" from row 1111 and a video PID "5012" from row 1112.

Next, the JMF 2005a supplies the acquired video/audio PID, and the AV decoder 1803 as the output destination, to the TS decoder 1802, via the library 2001b of the OS 2001. The TS decoder 1802 performs filtering based on the supplied PID. Here, TS packets with a PID of "5011" and "5012" are passed to the AV decoder 1803. The AV decoder 1803 decodes the supplied PES packet, and reproduces the video/audio via the display 1805 and the speaker 1804.

Finally, the service manager 2004 supplies the service identifier to the AM 2005b in the Java^{™} library 2005, and requests data broadcast reproduction. Here, data broadcast reproduction refers to extracting a Java^{™} program included in the MPEG-2 transport stream and causing the Java^{™} VM 2003 to execute the program. A format called DSMCC, which is noted in the MPEG specifications ISO/IEC 13818-6, is used as the method to embed the Java^{™} program in the MPEG-2 transport stream. Here, detailed descriptions of DSMCC shall be omitted. The DSMCC format prescribed a method in which a file system configured of files and directories used by a computer is encoded into a TS packet of the MPEG-2 transport stream using an MPEG-2 section. In addition, information of the Java^{™} program executed is in a format called AIT, is embedded within the TS packet of the MPEG-2 transport stream, and is sent as an MPEG-2 section with a table_id of "0x74". AIT is defined in chapter 10 of the DVB-MHP specifications (officially, ETSITS 101812 DVB-MHP specifications V1.0.2), and is an abbreviation of Application Information Table. Like the OCAP standard, the DVB-MHP standard is a specification for operating a Java^{™} program within the digital broadcast reception device. The OCAP standard is a functionally expanded version of the DVB-MHP standard, and therefore there are many commonalities between the OCAP and DVB-MHP standards. AIT is one of these commonalities.

The AM 2005b first acquires the AIT, and thus acquires the PAT and PMT in a manner identical to the JMF 2205a, and acquires the PID of the TS packet in which the AIT is stored. At this time, when the supplied service identifier is "10" and the PAT in FIG. 12 and PMT in FIG. 11 are sent, the PMT of FIG. 41 is acquired through a process identical to that of the JMF 2005a. The AM 2005b extracts a PID from an elementary stream which has "data" as a stream type and "AIT" as supplementary information, based on the PMT. Referring to FIG. 11, this is the elementary stream in row 1113, and thus the PID "5013" is acquired.

The AM 2005b supplies the TS decoder 1802 with the PID of the AIT and the table_id "0x74", via the library 2001b of the OS 2001. The TS decoder 1802 performs filtering with the supplied PID and table_id, and passes the resultant to the CPU 1806 through the primary storage unit 1808. As a result, the AM 2005b can collect the AIT.

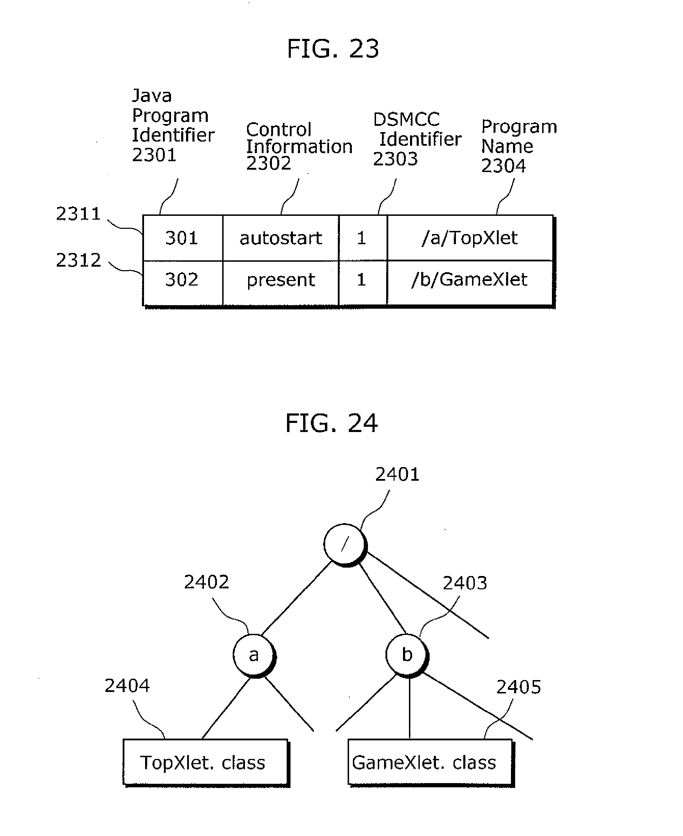

FIG. 23 is a diagram which schematically shows an example of information of the collected AIT. Column 2301 is a Java^{™} program identifier, and column 2302 is control information for the Java^{™} program. In the control information, there is "autostart," "present," and "kill"; "autostart" means that the terminal apparatus 1800 executes the Java^{™} program automatically in an instant, "present" means not performing automatic execution, and "kill" means stopping the Java^{™} program. Column 2303 is a DSMCC identifier for extracting the PID included in the Java^{™} program in the DSMCC format. Column 2304 is the program name of the Java^{™} program. Rows 2311 and 2312 are groups of the Java^{™} program information. The Java^{™} program defined in column 2311 is a set of an identifier "301", control information "autostart", a DSMCC identifier "1", and a program name "a/TopXlet". The Java^{™} program defined in column 2312 is a set of an identifier "302", control information "present", a DSMCC identifier "1", and a program name "b/GameXlet". Here, the two Java^{™} programs have the same DSMCC identifier. This indicates that two Java^{™} programs are included in one file system encoded in the DSMCC format. Here, only four types of information are specified for the Java^{™} program, but in actuality, more information is defined. Details can be found in the DVB-MHP specifications.

The AM 2005b finds the Java^{™} program with "autostart" from among the AIT, and extracts the corresponding DSMCC identifier and Java^{™} program name. Referring to FIG. 23, the AM 2005b extracts the Java^{™} program in row 2311, and acquires the DSMCC identifier "1" and the Java^{™} program name "a/TopXlet".

Next, the AM 2005b uses the DSMCC identifier acquired from the AIT, and acquires, from the PMT, the PID of the TS packet the Java^{™} program stored in DSMCC format. Specifically, the PID of the elementary stream with a stream type inside the PMT of "data" and which conforms to the DSMCC identifier of the supplemental information is acquired.

At this time, when the DSMCC identifier is "1" and the PMT is as in FIG. 11, the elementary stream of row 1114 matches, and thus the PID "5014" is fetched.

The AM 2005b specifies, via the library 2001b of the OS2001, the PID of the TS packet which carries the MPEG-2 section embedded with data in the DSMCC format and the section filter conditions to the TS decoder 1802. Here, the PID "5014" is supplied. The TS decoder 1802 performs filtering on the DSMCC MPEG-2 section using the supplied PID, and passes the resultant to the CPU 1806 via the primary storage unit 1808. As a result, the AM 2005b can collect the necessary DSMCC MPEG-2 section. The AM 2005b reconstitutes the file system from the collected MPEG-2 section in accordance with the DSMCC format, and saves the file system in the primary storage unit 1808. Taking data such as the file system from the TS packet within the MPEG-2 transport stream and saving the data in a memory unit such as the primary storage unit 1808 and the secondary storage unit 1807 is hereafter called "downloading."

FIG. 24 is a diagram showing an example of a downloaded file system. In this diagram, circles represent directories and squares represent files. This file system is configured of a root directory 2401, a directory "a" 2402, a directory "b" 2403, a file "TopXlet.class" 2404, and a file "GameXlet. class" 2405.

Next, the AM 2005b passes the Java^{™} program to be executed from among the downloaded file systems in the primary storage unit 1808 to the Java^{™} VM 2003. At this time, when the name of the Java^{™} program to be executed is "a/TopXlet", the file to be executed is the file "a/TopXlet.class", which is the Java^{™} program name with ".class" added. "/" is a directory and file name delimiter, and referring to FIG. 24, the file 2404 is the Java^{™} program which should be executed. Next, the AM 2005b passes the file 2404 to the Java^{™} VM 2003.

**Note** that the method for referring to the Java^{™} program that should be executed by the AM 2005b does not only depend on the AIT, In OCAP, which is assumed to be used in the United States cable system, XAIT, which includes reference information for an application denoted in FIG. 3, is used OOB. In addition, methods such as starting a program stored in advance in the ROM 1809, starting a program downloaded and stored in the secondary storage unit 1807, and so on can also be considered.

The Java^{™} VM 2003 executes the provided Java^{™} program.

Through the abovementioned process, the service manager 2004 accepts the service identifier and executes tuning, descrambling, video/audio reproduction, and Java^{™} program startup. This succession of processes is collectively called "service selection." "Performing service selection" can be defined as "making information held by the ES belonging to the service visible to a user." When service selection is performed, "video/audio carried by the ES belonging to the service are reproduced," and "the Java^{™} program carried in the ES belonging to the service is started," in accordance with the above process. It can be said that the video/audio reproduced through the service selection belongs to that service. In a like manner, it can be said that the Java^{™} program started through the service selection belongs to that service.

Upon receiving another service identifier, the service manager 2004 uses the library present in the Java^{™} library 2005 and once again performs service selection. In the present embodiment, the number of services selectable by the service manager 2004 is one.

The Java^{TM} library 2005 is a collection of Java^{TM} libraries stored in the ROM 1809. In the present embodiment, the Java^{TM} library 2005 includes the JMF 2005a, the AM 2005b, the tuner 2005c, a DSM-CC 2005d, an SI acquisition 2005e, and a service manager administration library 2005f. The Java^{™} program implements the function of the Java^{™} program while using these libraries.

The Java^{™} Media Framework (JMF) 2005a is a library for reproducing video, audio, and subtitle data present in the MPEG-2 transport stream. The JMF 2005a is a media control framework developed by Sun Microsystems; details can be found in the JMF 1.0 specification released by the same company. Necessary parts of the JMF specification are introduced as subsets in the OCAP specification. The Application Manager (AM) 2005b is a library provided so that the Java^{™} program can start and end itself. The Tuner 2005c is a library which sets tuning information for the QAM demodulator 1801 and changes the MPEG-2 transport stream received by the digital broadcast reception device. The DSM-CC 2005d is a library provided so that the Java^{™} program can access files carried in the MPEG-2 transport stream.

The SI acquisition 2005e is a library provided so that the Java^{™} program can acquire the service list managed by the SI management module 2006 (main service-list). The service manager administration library 2005f is a library that sends service selection requests to the aforementioned service manager 2004, and by the Java^{™} program using the service manager administration library 2005f, it is possible to newly perform service selection.

By using this Java^{™} library 2005, the Java^{™} program can acquire various information within the MPEG-2 transport stream and within other broadcast signals.

The SI 2005e within the Java^{™} library 2005 may be used in the aforementioned acquisition of the SI performed by the EPG 2002, and it is possible to instruct the service manager 2004 to perform service selection by using the service manager administration library 2005f within the Java^{™} library 2005. In addition, operations performed by the service manager 2004, such as tuning, video/audio reproduction, file acquisition through DSM-CC, and application startup can each be implemented by the EPG directly using the Tuner 2005c, the JMF 2005a, the DSM-CC 2005d, the AM 2005b within the Java^{™} library 2005.

**In** other words, it is possible to write a Java^{™} program with the same functions as the EPG 2002 and cause the Java^{™} VM 2003 to execute that program. In the OCAP environment, there are actual cases where such a Java^{™} program, which has the EPG functions, is distributed, and the digital broadcast reception device receives and executes that program.

As has been described thus far, various programs embedded in the terminal, Java^{™} programs, and each library within the Java^{™} library 2005 operate using the service list acquired by the SI management module 2006 (main service-list). So that the digital broadcast reception device can operate without inconsistencies, it is extremely important for the SI management module 2006 to provide the latest error-free service list (main service-list) to these libraries and programs.

As described earlier, the SI management module 2006 in the present embodiment is started when the digital broadcast reception device is started, monitors the SI table, and stores the SI. In the OCAP environment, the digital broadcast reception device receives and records both SCTE-SI transmitted OOB and PSIP transmitted In-band, and provides these to the embedded programs, Java^{™} programs, and each library within the Java^{™} library 2005. Furthermore, because information that updates the SI table is embedded in the broadcast signal and sent at any time to the digital broadcast reception device, it is necessary to continuously monitor the SI table for updates and perform management so that the latest SI table is continuously held.

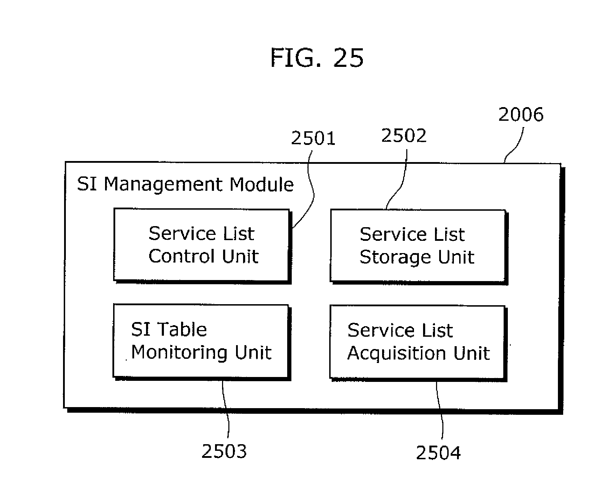

FIG. 25 is a block diagram showing a configuration of the SI management module 2006 in the present embodiment. The SI management module 2006 is configured of a service list control unit 2501, a service list storage unit 2502, an SI table monitoring unit 2503, and a service list acquisition unit 2504. Note that in the present embodiment, an updating unit that updates the main service-list (first service notification information) is configured from the service list control unit 2501 and the SI table monitoring unit 2503, and a storage unit that stores the main service-list (first service notification information) is configured from the service list storage unit 2502, the primary storage unit 1808, and the secondary storage unit 1807.

In the internal configuration diagram of the module shown in FIG. 25, a submodule for configuring the TV program management chart using the main service-list is not denoted. The configuration of the TV program management chart is of no relation to the present invention, and thus descriptions shall be omitted. The present invention is applicable regardless of how the TV program management chart is configured and managed.

The service list control unit 2501 performs overall control of the SI management module 2006, and is implemented as an embedded program which provides instructions to the service list storage unit 2502 and the SI table monitoring unit 2503, causing those units to operate. In addition, the service list control unit 2501 may be embedded as a dedicated circuit, embedded in a system LSI, or embedded in the digital broadcast reception device as an individual chip.

The service list storage unit 2502 controls, for example, the primary storage unit 1808 and secondary storage unit 1807 as shown in FIG. 18, and stores the latest service list (main service-list) at the point when power was last turned off in the secondary storage unit 1807 when power is supplied.

The service list control unit 2501 provides instructions to the service storage unit 2502, thereby causing the service list stored in the secondary storage unit 1807 at the point when power is supplied to the digital broadcast reception device (an original main service-list) and the SI table to be read out and a copy to be expanded in the primary storage unit 1808, and the service list and SI table stored in the primary storage unit 1808 to be provided.

In addition, the SI table monitoring unit 2503 of the digital broadcast reception device fetches the three abovementioned SI tables, NIT, NTT, and SVCT, or the LVCT SI table, which are embedded and sent within the broadcast signal, from the broadcast signal. The SI table monitoring unit 2503 compares the abovementioned SI table fetched from the broadcast signal with the three SI tables, NIT, NTT, and SVCT, or the LVCT SI table, stored in the primary storage unit 1808, and judges whether or not any of the stored SI tables have been updated.

When the SI table monitoring unit 2503 judges that an SI table has been updated, the service list control unit 2501 uses the SI table fetched from the broadcast signal to configure the service list via a corresponding method. In other words, if the SI tables fetched from the broadcast signal are the NIT, NTT, and SVCT, the service list control unit 2501 configures the service list shown in FIG. 17 by combining these SI tables; if the SI table fetched from the broadcast signal is the LVCT SI table, the service list control unit 2501 configures the service list shown in FIG. 17 by performing format conversion. Note that a service list configured from the latest SI table fetched from the broadcast signal in this manner is called a sub service-list, and the service list stored in the primary storage unit 1808 is called the main service-list.

The service list control unit 2501 compares the service list configured in the above manner (the sub service-list) and the service list stored in the primary storage unit 1808 (the main service-list), and causes updated parts to be reflected in the main service-list. At this time, the service control unit 2501 replaces the SI table stored in the primary storage unit 1808 with the updated SI table fetched from the broadcast signal. Furthermore, when necessary, the service control unit 2501 causes the main service-list in the primary storage unit 1808 which reflects the updated parts and the updated SI table to reflect in the secondary storage unit 1807 as well.

Note that the service list to be updated is the main service-list stored in the primary storage unit 1808, but it may also be the main service-list stored in the secondary storage unit 1807. In such a case, the primary storage unit 1808 is not necessary for managing the service list. In general, the read and write speeds of the primary storage unit 1808 are faster than those of the secondary storage unit 1807, and therefore, in this case, it can be thought that operation when searching for service data from the service list will be slower as compared to when reading out from the primary storage unit 1808; however, because an area in the primary storage unit 1808 is unnecessary, it is possible to reduce the amount of areas in the primary storage unit 1808.

In addition, here, the service list storage unit 2502 has caused the service list to be stored in the primary storage unit 1808 and the secondary storage unit 1807 shown in FIG. 18, but a storage device specifically for storing the service list in hardware, such as a dedicated register, may be prepared and used instead.

The SI table monitoring unit 2503 is implemented as a library that has functions for operating necessary hardware, acquiring SI tables that can be acquired OOB and In-band, and notifying the service list control unit 2501 if there have been updates. When dealing with OOB, the SI table monitoring unit 2503 instructs the CableCARD 1811 to filter and acquire the SI table transmitted OOB, and notifies the service list control unit 2501 in the case where the acquired SI table differs from SI tables of the same type that have been sent previously.

For example, when acquiring an SVCT transmitted OOB, the SI table monitoring unit 2503 first instructs the CableCARD 1811 to acquire the SVCT. The CableCARD 1811 notifies the SI table monitoring unit 2503 upon acquiring the OOB SVCT. The SI table monitoring unit 2503 then compares the SI table corresponding to the SVCT once previously acquired (that is, the SI table stored in the primary storage unit 1808) with the SI table corresponding to the SVCT newly acquired via the broadcast signal, and notifies the service list control unit 2501 if the two differ.

In addition, when dealing with the LVCT transmitted In-band, the SI table monitoring unit 2503 instructs the TS decoder 1802 to filter and acquire the SI table transmitted In-band, and notifies the service list control unit 2501 if the SI table corresponding to the LVCT newly acquired via the broadcast signal differs from the previous SI table of the same type (that is, the LVCT SI table stored in the primary storage unit 1808).

For example, when acquiring the LVCT transmitted In-band, the SI table monitoring unit 2503 first instructs the TS decoder 1802 to acquire the LVCT transmitted In-band. The TS decoder 1802 includes a device called a section filter (not shown) for filtering the MPEG-2 section, and filters and acquires the LVCT using this section filter. The TS decoder 1802 notifies the SI table monitoring unit 2503 upon acquiring the In-band LVCT. The SI table monitoring unit 2503 compares the LVCT once previously acquired (that is, the SI table corresponding to the LVCT stored in the primary storage unit 1808) with the newly acquired SI table corresponding to the LVCT, and notifies the service list control unit 2501 if the two differ. Note that there are also cases where the section filter included in the TS decoder 1802 has the acquisition function only when the specified MPEG-2 section is updated within the MPEG-2 transport stream. In such a case, the TS decoder 1802 notifies the SI table monitoring unit 2503 only when the SI table specified to be acquired is updated; therefore, the SI table monitoring unit 2503 may be configured so as to provide a notification to the service list control unit 2501 when the notification from the TS decoder 1802 arrives.

Note that the SI table monitoring unit 2503 may be embedded as a dedicated circuit, embedded in a system LSI, or embedded in the digital broadcast reception device as an individual chip.

The service list acquisition unit 2504 is implemented as a library used in the case where a program external to the SI management module 2206 uses the service list. The service list acquisition unit 2504 acquires the latest service list stored in the primary storage unit 1808, and provides the service information to the program that requests the service list.

Note that the service list acquisition unit 2504 may be embedded as a dedicated circuit, embedded in a system LSI, or embedded in the digital broadcast reception device as an individual chip.

In addition, the service list control unit 2501 has a service data search unit (not shown) that searches for necessary service data from the main service-list held by the primary storage unit 1808 or the secondary storage unit 1807. For example, upon receiving, from a Java^{™} program operating in the digital broadcast reception device, a service data search request an a source ID corresponding to the service data to be searched, the service data search unit searches the source IDs contained in the main service data, and outputs the service data corresponding to a source ID with the same value as the source ID that has been sent.

**In** addition, the service list control unit 2501 has a service data deletion unit (not shown) that deletes unnecessary service data from the main service-list held in the primary storage unit 1808 or the secondary storage unit 1807. For example, upon receiving, from a Java^{™} program operating in the digital broadcast reception device, a service data delete request an a source ID corresponding to the service data to be deleted, the service data delete unit causes the service data search unit to search for the service data corresponding to the source ID which is to be deleted, and deletes the searched service data from the main service data.

The OCAP-compliant digital broadcast reception device in the present embodiment can construct three types of service lists from the SI table. Specifically, these three types are a service list constructible from OOB NIT, NTT, and SVCT, a service list constructible from an OOB LVCT, and a service list constructible from an In-band LVCT.

In the present embodiment, the SI management module 2206 manages one service list (the main service-list) within the primary storage unit 1808 and the secondary storage unit 1807. In addition, in the present embodiment, as described above, the service list managed by the SI management module 2206 is the "main service-list," to be distinguished from the three types of service list configurable from the previously mentioned individual SI tables, which are called "sub service-lists." Moreover, the "sub service-lists" are further distinguished, with a sub service-list A being configured from the OOB NIT, NTT, and SVCT, a sub service-list B being configured from the OOB LVCT, and a sub service-list C being configured from In-band LVCT.

The services denoted in the main service-list and the sub service-list can be uniquely identified using the source IDs (service data identifiers), and therefore the SI management module 2006 manages the main service-list with the source IDs as identifiers. In other words, in the case where a sub service-list has been updated, the SI management module 2006 searches the main service-list for a service that has a source ID identical to the source ID of the service denoted in the updated sub service-list, and if a service with the same source ID is found, the information regarding that service (service data) is replaced with the service data of the sub service-list.

Or, if the same source ID is not found, the service data of that sub service-list is added to the main service-list. Hereafter, operations of submodules of the SI management module 2206 shall be described in detail.

When the digital broadcast reception device is started, the service list control unit 2501 is started by the OS 2001. When the service list control unit 2501 is started, it first instructs the service list storage unit 2502 to move the original service list (main service-list) stored in the secondary storage unit 1807 to the primary storage unit 1808. Upon receiving the instruction, the service list storage unit 2502 reads out the main service-list from the secondary storage unit 1807 and expands the main service-list as a copy in the primary storage unit 1808.

Accordingly, it is possible to search the main service-list faster, as compared to the case where the main service-list stored in the secondary storage unit 1807 is used as-is.

Next, the service list control unit 2501 instructs the SI table monitoring unit 2503 to monitor the OOB NIT, NTT, and SVCT, the OOB LVCT, and the In-band LVCT. Upon receiving the instruction, the SI table monitoring unit 2503 uses the TS decoder 1802 and the CableCARD 1811, and begins monitoring the specified SI tables.

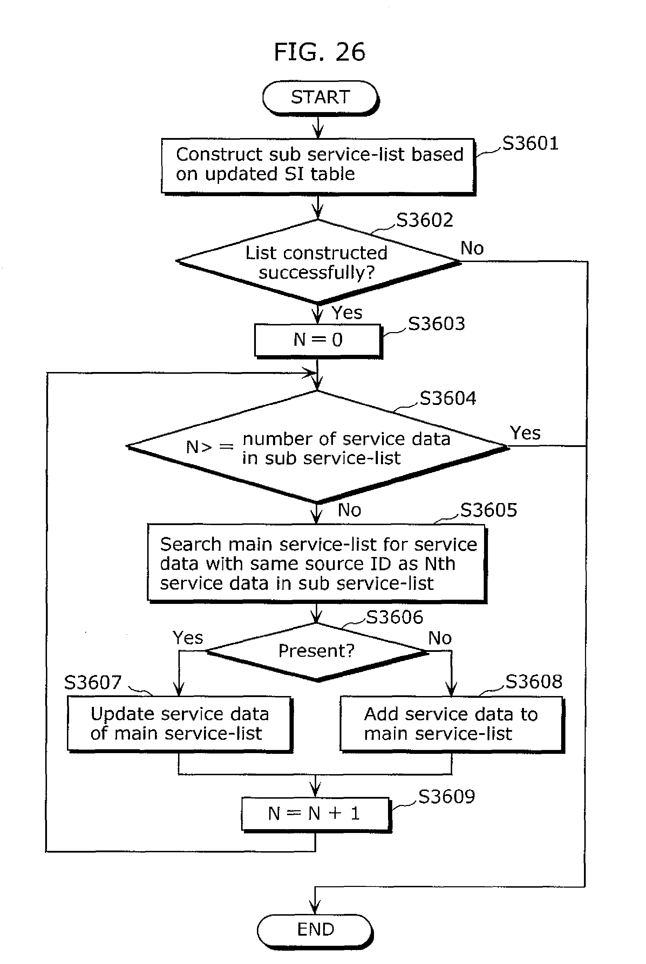

FIG. 26 is a flowchart showing an operation of the service list control unit 2501 at the time of an update of the main service-list stored in the primary storage unit 1808. Upon finding an SI table update, the SI table monitoring unit 2503 notifies the service list control unit 2501.

The service list control unit 2501 constructs a sub service-list using the SI table, the update of which was notified (for example, a sub service-list such as is shown in FIG. 17 is created) (S3601). Specifically, the service list control unit 2501 has stored, in advance, details of the processing for constructing a sub service-list from the OOB NIT, NTT, and SVCT, the processing for constructing a sub service-list from the OOB LVCT, and the processing for constructing a sub service-list from the In-band LVCT, and constructs the sub service-list based on the processing which corresponds to the SI table which has been notified as being updated.

At this time, in the case the updated SI table is in an incorrect format, or the case where a combined service list could not be constructed due to the information in the updated SI table being incorrect, the updated SI table being one of the OOB NIT, NTT, and SVCT, the SI table update is abandoned, and no action is taken (S3602).

For example, there are cases of inconsistencies between the information in the three SI tables, such as where the "CDS index" denoted in the SVCT has a value not present in the NIT-CDS.

After this, all service data contained in the constructed sub service-list are examined to see whether or not the service data is included in the main service-list managed by the service list storage unit 2502 (in this example, the main service-list stored in the primary storage unit 1808) (S3605); if the service data is included (Yes of S3606) the information of the corresponding service data in the main service-list is updated to that of the sub service-list (S3607), and if the service data is not included (No of S3606), the service data of the sub service-list is added to the main service-list (S3608).

Here, step S3603 is the initialization of the loop variable N, and step S3603 is the increment of the loop variable N. When all the services included in the sub service-list have been examined (Yes of S3604), the update sequence ends. After this, the service list control unit 2501 causes the updated parts of the updated main service-list stored in the primary storage unit 1808 to be reflected in the main service-list stored in the secondary storage unit 1807. This may be implemented, for example, by overwriting the original main service-list stored in the secondary storage unit 1807 with the updated main service-list.

The service list acquisition unit 2504 acquires, as necessary, the information of the main service-list managed by the service list storage unit 2502, and provides that information to a program (module) external to the SI management module 2006 which requests that information. In the present embodiment, it is not necessary to create a main service-list for each of the three types of sub service-lists (sub service-lists A, B, and C); one common main service-list is used in management.

Because services with identical source IDs are identical, there is no problem in overwriting service data in a sub service-list of a certain source ID with service data included in another sub service-list with an identical source ID. For example, there is no problem even if service data from the sub service-list constructed from the OOB LVCT and made to show in the main service-list is subsequently updated via service data with the same source ID included in the sub service-list constructed from the OOB NIT, NTT, and SVCT. In the OCAP environment, normally, the three service lists have identical data, and when, for example, a service has been added, through the SI table being updated, one main service-list is updated using the three sub service-lists (sub service-lists A, B, and C).

However, there are situations in which the timing of this update experiences a delay of a few seconds or more, rather than being instantaneous, due to gaps in send timings of differing SI tables (OOB NIT, NTT, SVCT; OOB LVCT; In-band LVCT), gaps in time settings of facilities on the sending side, and so on. In the present embodiment, it is possible to cause the main service-list to reflect the service data from the first sub service-list updated, of the three acquired sub service-lists.

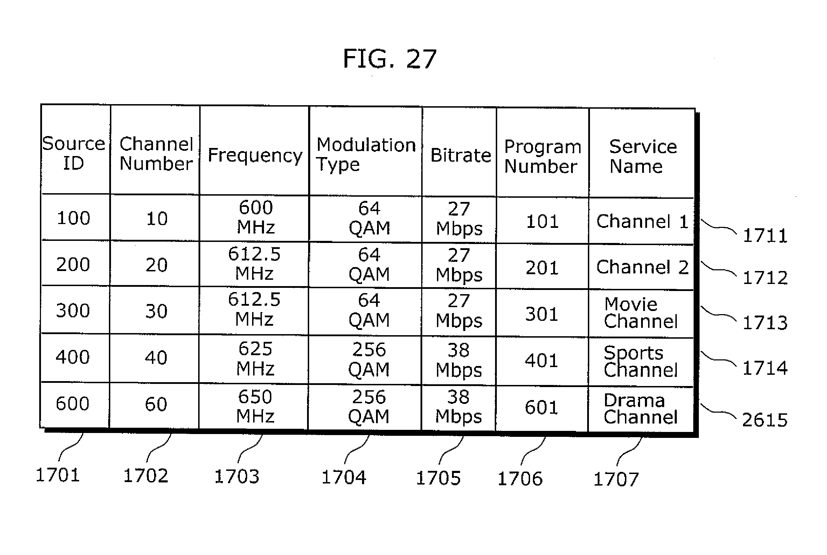

For example, the main service-list stored in the primary storage unit 1808 has the details shown in FIG. 17; the SI table monitoring unit 2503 confirms the update of the OOB SVCT SI table; and the service list control unit 2501 uses this to newly create the sub service-list A, which is shown in FIG. 27.

FIG. 27 is a diagram showing an example of the sub service-list A newly constructed via an update of the SVCT SI table.

In this case, the information of the service data corresponding to a value of 600, shown in the source ID 1701 of FIG. 27, is not present in the main service-list in the primary storage unit 1808; therefore, the service list control unit 2501 newly adds the abovementioned service data to the main service-list in the primary storage unit 1808, and then causes this to be reflected in the original main service-list stored in the secondary storage unit 1807.

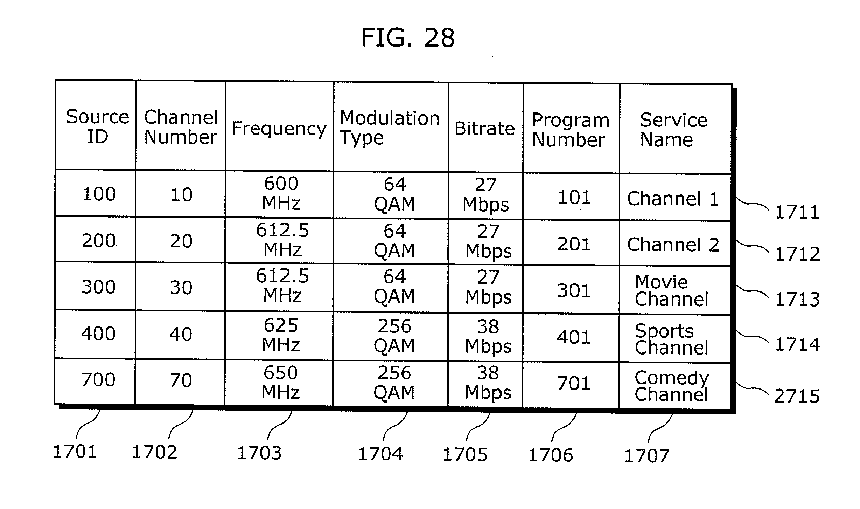

After that, for example, the SI table monitoring unit 2503 confirms the update of the In-band LVCT SI table; the service list control unit 2501 uses this to perform format conversion and so on as necessary, and newly constructs the sub service-list C shown in FIG. 28.

FIG. 28 is a diagram showing an example of the sub service-list C newly created via an update of the LVCT SI table.

In this case, the main service-list updated via the sub service-list shown in FIG. 27 through the abovementioned processing is stored in the primary storage unit 1808; however, the information of the service data with a source ID value of 700, which is present in the sub service-list shown in FIG. 28, is not present in the main service-list in the primary storage unit 1808. Therefore, the service list control unit 2501 newly adds the abovementioned service data to the main service-list in the primary storage unit 1808, and then causes this to be reflected in the original main service-list stored in the secondary storage unit 1807. With such a configuration, even if there are plural types of SI (SI tables) transmitted in the broadcast signal, the main service-list is updated using the SI table that has had the latest update, regardless of type; therefore, it is possible to consistently maintain the latest main service-list.

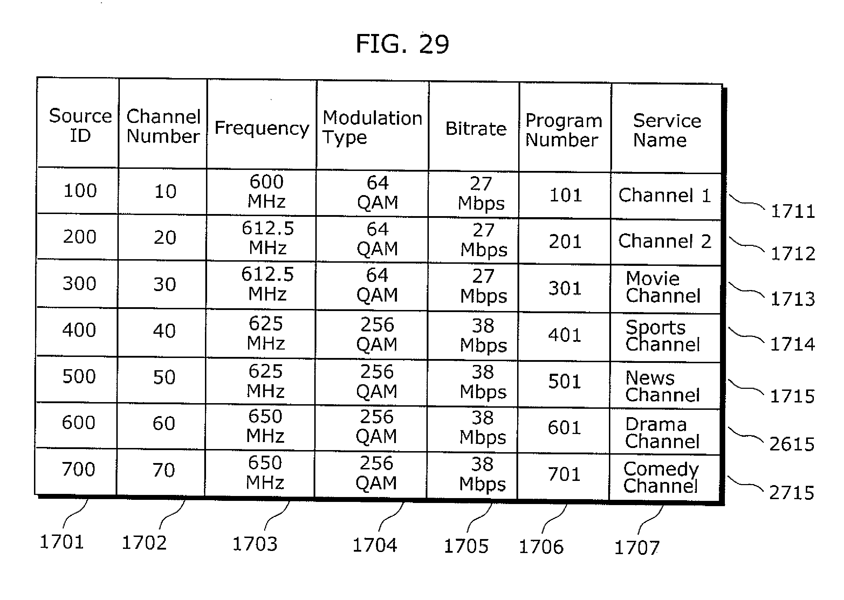

FIG. 29 is a diagram showing an example of a main service-list updated in the manner described above. In this main service-list, service data with source IDs of 600 and 700 have been added to the main service-list shown in FIG. 17.

In the case where the main service-list held by the service list storage unit 2502 is as shown in FIG. 29 at a certain point in time, the EPG 2002 can display, in the screen, TV program information constructed using the seven pieces of service data, which is present in rows 1711 to 1715, 2615, and 2715 shown in FIG. 29, and the TV program management chart (not shown).

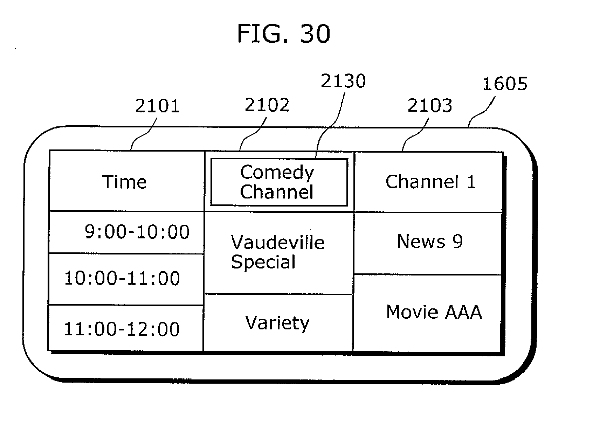

FIG. 30 is a diagram showing a screen displayed by the EPG 2002. The screen configuration of the EPG 2002 shown in FIG. 30 is identical to those shown in FIGS. 21A and 21B. To simplify the descriptions in the present embodiment, and to save space in the screen, the seven services are not arranged and displayed side by side; in the screen, two services, as well as TV program information and time slots corresponding thereto, are displayed in the screen as a TV program list (TV program information). In this example, the TV program list cannot display all the services within the screen, and so to display the information that cannot be displayed within the screen, the right and left keys of the input unit 1810 are used to scroll the information displayed in the TV program list to the left or right. In the case where the input unit 1810 is the front panel shown in FIG. 19, when the left button 1903 is pressed, the TV program list scrolls to the left, and the EPG 2002 screen shown in FIG. 21A becomes as shown in FIG. 30. With the EPG 2002, services are arranged in order, from the left, from low channel numbers up, and because there is no service with a channel number lower than "Channel 1", the display is looped, and the "Comedy Channel", which has the highest channel number, is displayed in column 2102.

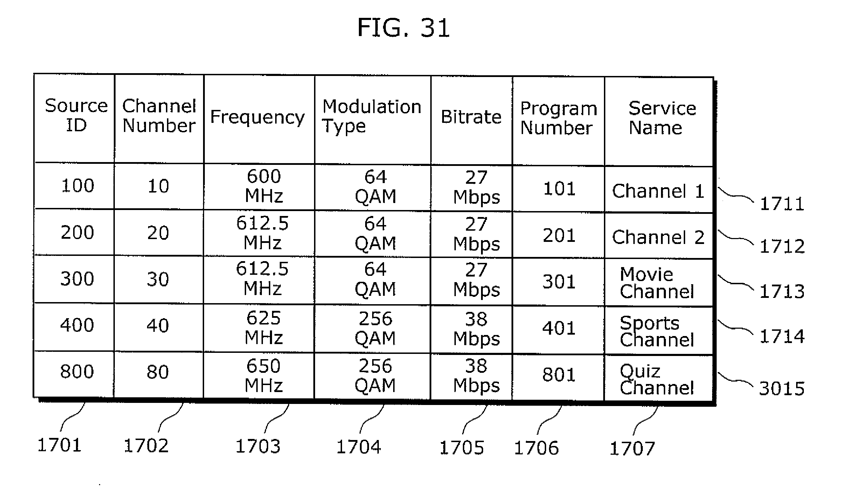

In addition, in a state where the main service-list shown in, for example, FIG. 29 is present, the SI table monitoring unit 2503 confirms the update of the OOB LVCT SI table; the service list control unit 2501 uses this to perform format conversion and so on as necessary, and newly constructs the sub service-list B shown in FIG. 31.

In this case, the main service-list shown in FIG. 29 is stored in the primary storage unit 1808 through the abovementioned processing; however, the information of the service data with a source ID value of 800, which is present in the sub service-list shown in FIG. 31, is not present in the main service-list in the primary storage unit 1808. Therefore, the service list control unit 2501 newly adds the abovementioned service data to the main service-list in the primary storage unit 1808, and then causes this to be reflected in the original main service-list and SI table stored in the secondary storage unit 1807.

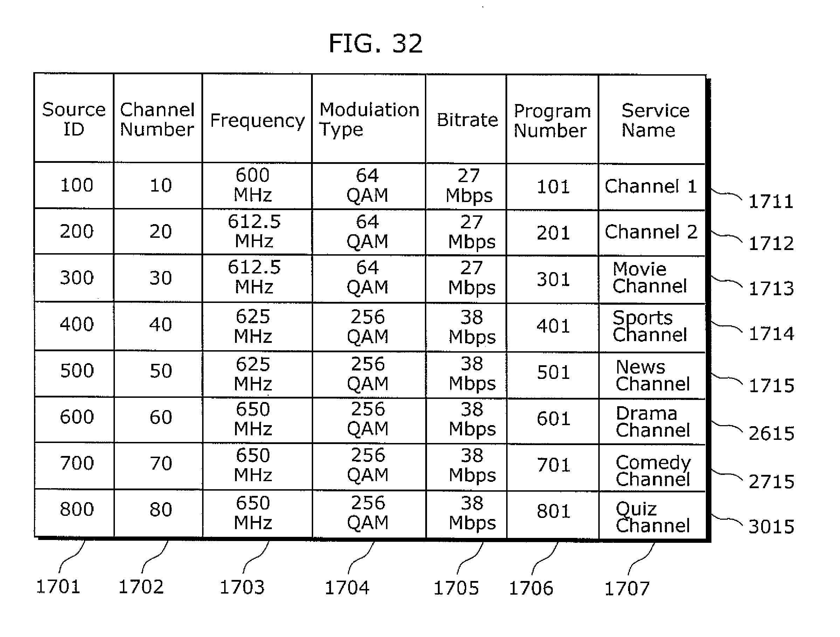

As a result, the main service-list is updated to that shown in FIG. 32.

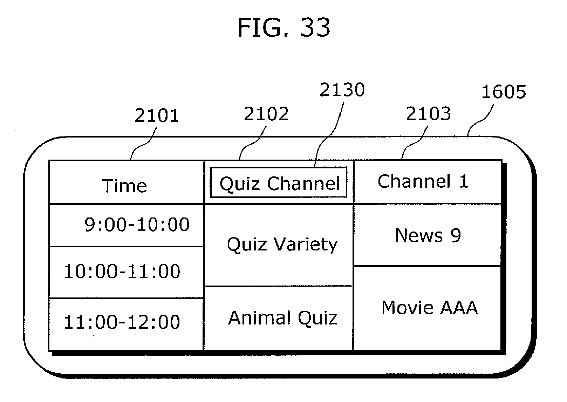

The main service-list has had row 3015 added to the pre-update main service-list (the main service-list shown in FIG. 29). After this update, in the EPG 2002 screen display, when the left button 1903 is pressed in the state shown in FIG. 21A, the screen display becomes such as is shown in FIG. 33.

FIG. 33 is a diagram showing a screen displayed by the EPG 2002.

"Quiz Channel", which has the highest channel number, is displayed in row 2102 of this screen. Accordingly, it can be seen that the main service-list has been updated through the sub service-list B.

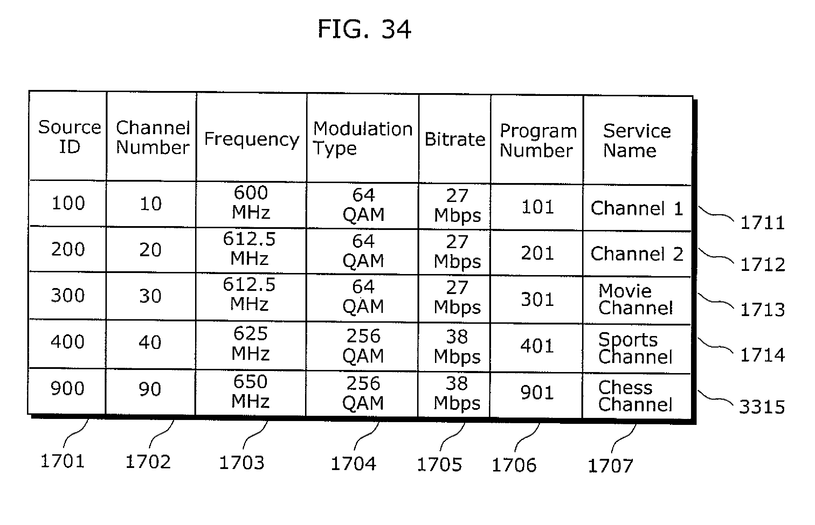

In addition, in a state in which the main service-list shown in FIG. 32 is present, the SI table monitoring unit 2503 confirms the update of the OOB SVCT SI table, and the service list control unit 2501 uses this to newly create the sub service-list A, which is shown in FIG. 34.

The sub service-list shown in FIG. 34 is described, in this example, as not having information of service data corresponding to the source ID 1701 value of 600, as shown in the sub service-list in FIG. 27; however, this sub service-list may have this information.

In the case where the sub service-list A shown in FIG. 34 has been constructed, the information of the service data corresponding to a value of 900, shown in the source ID 1701 of FIG. 34, is not present in the main service-list in the primary storage unit 1808; therefore, the service list control unit 2501 newly adds the abovementioned service data to the main service-list in the primary storage unit 1808, and then causes this to be reflected in the original main service-list stored in the secondary storage unit 1807.

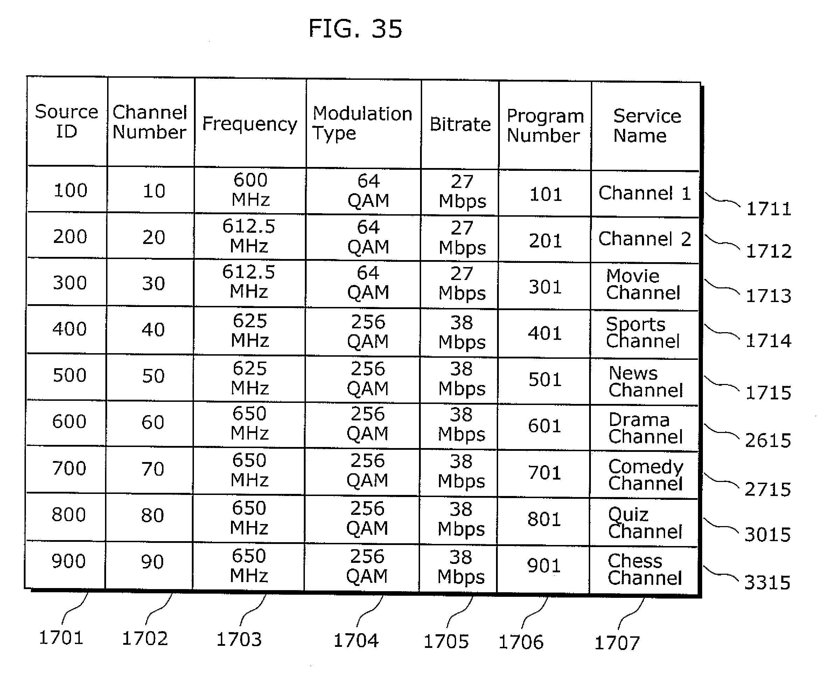

As a result, the main service-list is updated to that shown in FIG. 35.

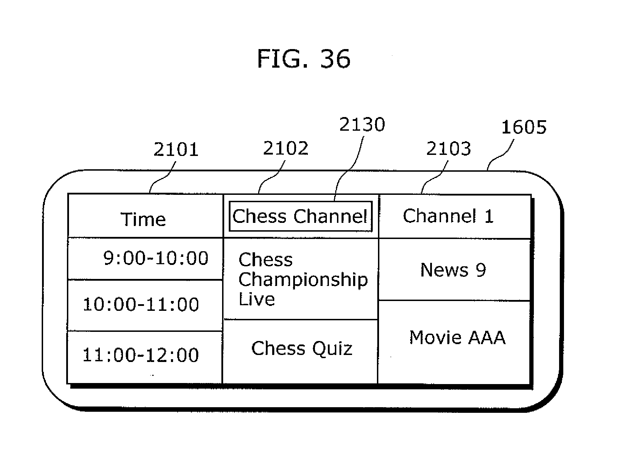

The main service-list has had row 3315 added to the pre-update main service-list (the main service-list shown in FIG. 32). After this update, in the EPG 2002 screen display, when the left button 1903 is pressed in the state shown in FIG. 21A, the screen display becomes such as is shown in FIG. 36.

FIG. 36 is a diagram showing a screen displayed by the EPG 2002.

"Chess Channel", which has the highest channel number, is displayed in row 2102 of this screen. Accordingly, it can be seen that the main service-list has been updated through the sub service-list A. In such a manner, in the present embodiment, the main service-list is updated via plural sub service-lists, and is used when programs such as the EPG 2002 are executed. Note that the present invention has no relation to the EPG screen configuration, and is applicable regardless of what kind of screen configuration is used.

Also note that in the present example, acquisition of all three sub service-lists (sub service-lists A, B, and C) is a requisite, but the configuration may be one in which only two of these sub service-lists are acquired. In such a case, there is no need for the SI table monitoring unit 2503 to monitor the SI table of the sub service-list not acquired. Thus the main service-list is constructed from and updated through only the acquired sub service-lists. For example, in the case of a configuration in which the sub service-lists B and C are monitored but the sub service-list A is not monitored, when the main service-list such as is shown in FIG. 29 is present and a sub service-list B such as is shown in FIG. 31 is received, the main service-list is updated to that shown in FIG. 32, and in the EPG 2002, when the left button 1903 is pressed in the state shown in FIG. 21A, the screen display becomes as is shown in FIG. 33. However, after this, when the sub service-list A such as is shown in FIG. 34 is received, the updates therein are ignored, the main service-list is not updated, and the EPG 2002 screen display does not change. Accordingly, sub service-lists may be ignored in this manner.

In addition, a configuration has been described in which the sub service-lists are acquired through three types of methods (OOB NIT, NTT, and SVCT; OOB LVCT; and In-band LVCT); however, if there are four or more methods for acquiring the sub service-lists, a configuration may be used in which part (at least 2) or all of the sub service-lists are acquired in accordance with those methods.

Moreover, in the present embodiment, when a sub service-list is to be constructed, or in other words, when updating the main service-list through the service list control unit 2501, if the format of the SI table is judged to be incorrect (S3602, in FIG. 26), no action is taken, and thus when an SI table of an incorrect table format is received, no action is taken. However, in the case where not all but only some of the SI tables are in an incorrect format, and the sub service-list is constructed using the correct SI tables, the configuration may be one in which updating is carried out using the usable sub service-lists.

In addition, in the present embodiment, the timing at which the service list storage unit 2502 writes back the main service-list expanded in the primary storage unit 1808 into the secondary storage unit 1807 is set so as to occur when the main service-list is updated based on the sub service-list being updated; however, the main service-list may be written back into the secondary storage unit 1807 at a different timing. For example, an algorithm may be introduced in which the service list storage unit 2502 periodically compares the main service-list in the primary storage unit 1808 with the main service-list in the secondary storage unit 1807, and if the two are different, performs a writeback for backup purposes. Or, and algorithm in which a writeback is not performed may be used. In this case, only the main service-list in the primary storage unit 1808 is updated and used. In such a case, when power is turned off, a readout of the main service-list in the secondary storage unit is performed again only when power is resupplied. Also, writebacks to the secondary storage unit 1807 may be performed only when power is turned off.

Moreover, the configuration may be one in which updating of the main service-list present in the secondary storage unit 1808 is performed by a module external to the SI management module 2206. For example, there is the possibility that an external module, not the SI management module 2206 described in the present invention, updates the main service-list, such as the case where the main service-list is distributed and operated via recent media such as CDs, DVDs, and BDs; in such a case, the main service-list provided to the secondary storage unit 1807 is updated through a separate module. Moreover, in such a case, a situation can be considered in which the processing for writing back the main service-list, which is performed by the service list storage unit 2502 in the SI management module 2206, should be prohibited; therefore, a system may be implemented in which a function for determining whether or not to write back the main service-list to the secondary storage unit 1807 is added to the service list control unit 2501 or the service list storage unit 2502, and the external module uses that function to prohibit the SI management module 2006 from updating the main service-list in the secondary storage unit 1807.

In addition, regarding write-backs, in order to prevent data loss caused by power failure and the like during the process of the service list storage unit 2502 writing the main service-list held in the primary storage unit 1808 into the secondary storage unit 1807, an algorithm may be introduced in which the main service-list is first written to a separate area within the secondary storage unit 1807, and after that write has succeeded, the old pre-writeback main service-list is automatically deleted. Furthermore, the configuration may be one in which the old main service-list is maintained as history data after the successful write. In this case, the configuration may add, to the service list storage unit 2502, a function for deleting the main service-list, so that the module external to the SI management module 2206 can freely control the timing of deletion of the main service-list; the OS 2001 is notified when the areas in the secondary storage unit 1807 are filling up, and the OS 2001 uses the main service-list deletion function to delete the main service-list.

Moreover, in the case where the digital broadcast reception device has a system through which it can connect to other devices or the exterior, such as a network connection function, USB or IEEE 1394 terminals, Bluetooth functionality, and the like, the SI table monitoring unit may configure the sub service-lists via SI tables inputted to the digital broadcast reception device through those external connection terminals. In addition, rather than constructing the sub service-lists from the SI tables, the sub service-lists may be received directly, and the main service-list updated thereby. In such a case, the SI table monitoring unit 2503 is not necessary; the service list control unit 2501 monitors the network connection terminal, external connection terminal, and so on, waits for reception of a sub service-list, and when the sub service-list is received, uses the service data within that sub service-list to update the main service-list. In addition, the digital broadcast reception device may automatically access another device and examine whether or not a sub service-list held in that device has been updated.

Particularly for a service list constructible from SI tables acquirable from In-band MPEG-2 transport streams, there are cases where only specific information within the MPEG-2 transport stream is presented by the service list. For example, with PSIP, there are cases where an LVCT including a service list that enumerates only the service included in that MPEG-2 transport stream is transmitted. Sub service-lists constructed from SI tables transmitted OOB include data of the services included in all MPEG-2 transport streams, and therefore in this case, the service data of the sub service-list configured from In-band LVCT is a subset of the service data of the sub service-list constructed from the OOB SI table. Even in such a case, service management is performed via the source IDs, and the basic idea that identical source IDs indicate identical services does not change; therefore, service data with matching source IDs within the main service-list are simply replaced during the update, and no particular inconsistencies occur. The sub service-list may be constructed at the time of acquiring an In-band PSIP LVCT, and the main service-list may be updated in accordance with the algorithm in FIG. 26.

The present invention assumes a digital broadcast reception device operating in the OCAP environment, but the broadcast terminal does not need to be OCAP-compatible as long as it can receive SI. For example, the present invention is applicable even if the environment is one in which Java^{™} programs do not operate, as long as programs and modules which use SI are present in the broadcast terminal. Furthermore, in the present embodiment, descriptions have been given primarily on simultaneous acquisition of SI tables specified in OOB SCTE-SI and In-band PSIP SI tables; however, all SI tables may be In-band, or all SI tables may be OOB. Moreover, the environment may be terrestrial broadcast, satellite broadcast, network broadcast, or the like, rather than the cable environment. Furthermore, in the present embodiment, SCTE-SI and PSIP are used as examples, but the terminal does not depend on a specific SI; any terminal is applicable as long as it can configure the service list through a plurality of methods. For example, even a terminal that can only received OOB SCTE-SI can configure sub service-lists from both the NIT, NTT, and SVCT, and the LVCT. For example, there are cases where SI tables of plural SI specifications, such as SCTE-SI and PSIP, can be received simultaneously. For example, in the present embodiment, the sub service-list is constructed from In-band LVCT, but it is also possible to construct the sub service-list using the PMT. Actually, after purchase, many broadcast terminals search In-band frequency bands and record basic information of the PMT and the like, as well as recording tuning information of the frequency at which the PMT was acquired, and thereby create a simple sub-service table. In addition, even in DVB-SI, there are situations where the SI table that holds a Service Description Table (SDT) service list holds, at the same time as the SI table that transmits tuning information called a Network Information Table (NIT), a service list descriptor and service list information. Construction of the sub service-list and the application of the present invention are possible even in such a case. Moreover, when considering future changes in the SI specification, a number of methods for constructing the sub service-list will become possible, but the present invention is applicable in such a case as well. Note that PSIP and SCTE-SI define specifications in which a service can be uniquely isolated via a source ID, and thus the source ID is used as a primary key for managing the service data; however, if there is a field through which the service can be uniquely identified, the service data may be managed using that field, rather than a source ID.

For example, in an environment in which the specification allows overlapping service names but the operational standard forbids such overlapping, it is possible to use the service name as the primary key. Moreover, in DVB-SI, the service is uniquely identified using a combination of two fields, or an "Original Network ID" and a "Service Number". In such a case, the service may be uniquely isolated using a combination of plural fields.

Also, in the present embodiment, because there is no system for deleting service data within the main service-list, the service data is not deleted from the main service-list, and the number of pieces of service data denoted therein only grows. In a broadcast environment where services are frequently added, there is a problem in that the main service-list can become immense, and as a result, many areas become necessary within the primary storage unit 1807 and the secondary storage unit 1808 in order to expand the main service-list, and thus the search speed slows down. To solve this problem, a system may be used in which, for example, when checking an update by a sub service-list via the service list control unit 2501, "service data which is present in the main service-list, but is not present in the new sub service-list" is checked, and for service data which is no longer present in all the sub service-lists monitored, the service list storage unit 2502 is instructed to delete the service data from the main service-list. Or, the service data which is no longer present in the latest sub service-list may be deleted from the main service-list. In addition, to simplify the updating sequence further, when updating the service data of the main service-list, the sequential updating of all service data in the sub service-list, or the procedure from S3603 to S3603 in FIG. 26, may be omitted, and a method for simply replacing the main service-list with the sub service-list may be used. In such a case, the service data added in the sub service-list is added to the main service-list as-is, and the service data deleted in the sub service-list is deleted from the main service-list as-is. To be more specific, for example, in the case where the updated sub service-list is as shown in FIG. 27, and the main service-list at that point in time is as shown in FIG. 28, a simple replacement is performed; as a result, row 2615, which is included in the updated sub service-list but is originally not present in the main service-list, is added, and row 2715, which is not included in the updated sub service-list but is originally present in the main service-list, is deleted.

In addition, with the above-mentioned method, only one piece of service data can be registered in one row of a service. Therefore, when incorrect data is recorded, there is the possibility that that incorrect data may be kept until the next SI table update. Accordingly, a configuration may be used in which, at the time of an update of the main service-list by service list control unit 2501, the pre-update service data is also recorded as history data without being deleted from the main service-list, and if it is judged that the post-update service data is incorrect data, the service data is restored to the previous data. In this case, in order to check whether or not the data is incorrect, a system for accepting feedback from the module external to the SI management module 2006, which actually used the service data, is built in to the service list control unit 2501. In the case where incorrect service data is acquired, the service list control unit 2501 deletes the service data included in the main service-list stored by the service list storage unit 2502, and restores the previous service data stored as history. An example at the time of tuning can be given as a specific example. At the time of tuning, the tuner 2005c requires tuning information in order to receive the MPEG-2 transport stream that transmits the service in question. Therefore, the tuner 2005c uses identification information of service, such as the source ID, acquires the service data in question through the service list acquisition unit 2504 and the service data search unit, acquires the tuning information denoted therein, and performs tuning.

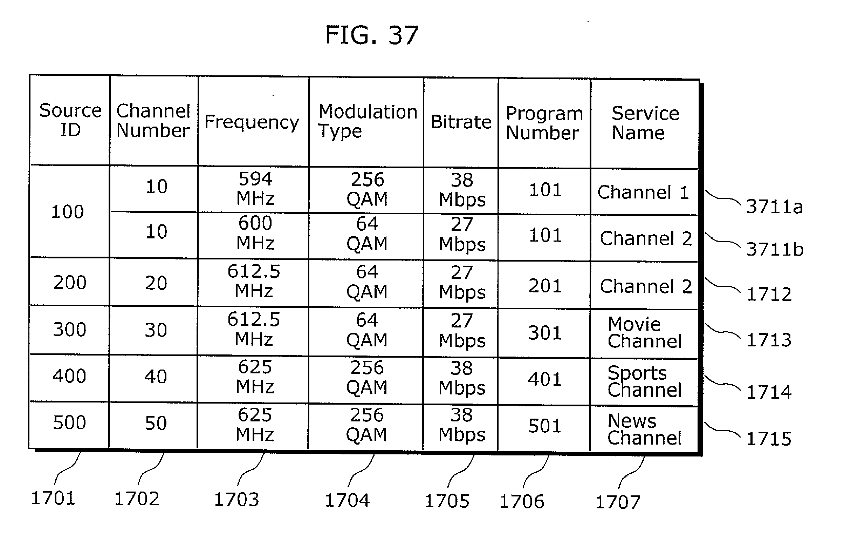

FIG. 37 is a diagram showing an example of the main service-list in which the pre-update service data has been left as a history.

For example, when the main service-list is as shown in FIG. 37, the service data with a source ID of "100" is updated and becomes row 3711a, and the pre-update service data is held as history data as row 3711b. At this time, in order to perform tuning on the MPEG-2 transport stream that transmits the service with the source ID of "100", the tuner 2005c specifies the source ID "100" to the service data search unit and requests a search of service data; receives row 3711a, which is the result of the service data search; and performs tuning using tuning information such as a frequency. At this time, for example, tuning is performed using the service data acquired here; however, in the case where the MPEG-2 transport stream could not be received from the specified frequency, this service data can be thought of as incorrect, and thus the tuner 2005c notifies the service list control unit 2501 that the data in row 3711a is incorrect. Upon receiving the notice that the data is incorrect, the service list control unit 2501 instructs the service list storage unit 2502 to delete row 3711a, which is the latest service data, restore row 3711b, which is the history data, and use row 3711b for searches thereafter. Any number of historical data may be present in such a system.

Note that in the examples given in the present embodiment, all services are digital broadcasting services, and include tuning information for acquiring information for managing the main service-list and the MPEG-2 transport stream, a program number for searching the PMT, and so on. However, the SI specifications used in each region define fields regarding analog broadcasting services, and it is possible to identify the analog broadcasting services using service identifiers, in the same manner as with digital broadcasting services. For example, with SCTE-SI, it is possible to uniquely isolate an analog broadcasting service using a source ID, in the same manner as with digital broadcasting services. In such an environment, where analog broadcasting services can be uniquely identified using the same service identifiers as with digital broadcasting services, the service data of analog broadcasting services can also be added to the main service-list using the algorithm described in the present embodiment. Therefore, the present embodiment is applicable even in the case where the SI used includes information not only of digital broadcasting services but also of analog broadcasting services.

In addition, in the present embodiment, it is also possible to save the content held by the ROM 1809 in the secondary storage unit 1807, thereby making the ROM 1809 unnecessary. In addition, it is also possible to configure the secondary storage unit 1807 of a plurality of sub-secondary storage units, with each sub-secondary storage unit saving differing information. It is possible to precisely divide the sub-secondary storage units; for example, only tuning information is saved in one of the sub-secondary storage units, the library 2001b of the OS 2001 is saved in another sub-secondary storage unit, downloaded Java^{™} programs are saved in yet another sub-secondary storage unit, and so on.

In addition, in the present embodiment, downloaded Java^{™} programs are saved in the secondary storage unit 1807, but it is also possible to save the downloaded Java^{™} programs in the primary storage unit 1808. In the case of saving in the primary storage unit 1808, all saved information disappears when power is turned off, but a configuration may be used in which the Java^{™} programs stored in the primary storage unit 1808 are moved to the secondary storage unit 1807 when power is turned off, and the Java^{™} programs moved to the secondary storage unit 1807 are returned to the primary storage unit 1808 when power is resupplied.

### (Second Embodiment)

In the first embodiment, the example described was one in which a single main service-list is stored in the primary storage unit 1808 or the secondary storage unit 1807. However, the first embodiment has a drawback in that, for example, once a sub service-list is configured with incorrect service data, the main service-list itself will also include incorrect service data. For example, in the case where, when a certain service is added, correct service data is added to the OOB NIT, NTT, SVCT, but, through a setting problem in the broadcast station system, incorrect service data is added to the OOB LVCT by mistake, even if the sub service-list is configured of the former service data and the main service-list is updated correctly, a sub service-list is configured of the latter service data later on, and the main service-list is again updated later using the incorrect service data.

In the second embodiment, rather than using one main service-list for each sub service-list (sub service-lists A through C), the primary storage unit 1808 or secondary storage unit 1807 holds a corresponding main service-list for every sub service-list (sub service-list A through C). In other words, in the OCAP environment, in which three sub service-lists are present, the service is managed using three main service-lists, and when a certain sub service-list is updated, only the corresponding main service-list is updated. In the present embodiment, the three main service-lists corresponding to each sub service-list managed by the service list storage unit 2502 are called "main service-lists". In addition, in the same manner as the sub service-list, a main service-list corresponding to the sub service-list A is called a main service-list A, a main service-list corresponding to the sub service-list B is called a main service-list B, and a main service-list corresponding to the sub service-list C is called a main service-list C.

Upon being notified by the SI table monitoring unit 2503 of an SI table update, the service list control unit 2501 first judges which sub service-list to construct, based on the updated table. Next, based on the constructed sub service-list, the service list control unit 2501 updates the stored main service-list that corresponds to the sub service-list managed by the service list storage unit 2502.

Upon being requested to acquire a service list (service data) by a module external to the SI management module 2006, the service list acquisition unit 2504 (service data search unit) accepts, at the same time, a specification of which main service-list (the service data of which main service-list) to acquire. The specified main service-list (service data of the main service-list) is acquired and passed to the requestor. Note that a situation can be considered in which, when the service data search unit is requested to acquire the service data by a program (module) external to the SI management module 2006 but which operates within the digital broadcast reception device, the service data searching unit searches the main service-lists in accordance with a pre-set priority level, rather than accepting the specification to acquire the service data of which main service-list.

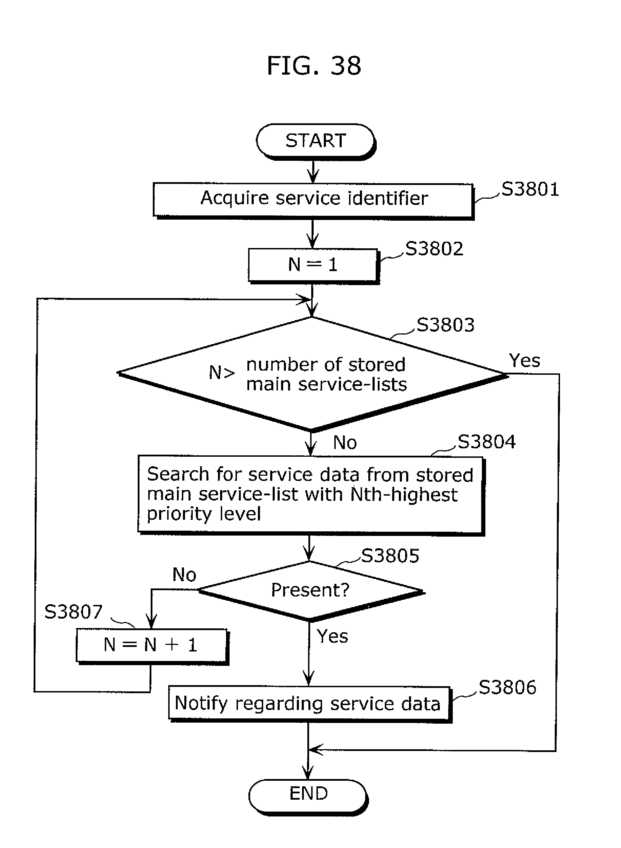

FIG. 38 is a flowchart showing an operation through which the service list acquisition unit 2504 (service data search unit) acquires the service data in accordance with the priority level.

Upon acquiring a service identifier from a program that operates within the digital broadcast reception device but external to the service list acquisition unit 2504 itself (S3801), the service list acquisition unit 2504 first sets N as 1 in order to search within the main service-list with the highest priority level (S3802), and if N is less than or equal to the number of main service-lists present at that point in time (No of S3803), the service data is searched from within the main service-list with the Nth-highest priority level (S3804). If the service data is present (Yes of S3805), the service data is acquired and returned to the program (S3806). If the data is not present (No of S3805), 1 is added to N (S3807), and the process returns to S3803. For example, in the case where main service-list A (constructed from OOB NIT, NTT, and SVCT) has the highest priority level, with main service-list B (constructed from OOB LVCT) and main service-list C (In-band LVCT) following in priority level thereafter, main service-list A is searched first; if the service data is not found, the already-stored main service-list B and main service-list C are searched in order thereafter.

For example, in the case where the main service-lists A, B, and C are as shown in FIG. 17, FIG. 27, and FIG. 28 respectively, when the service list search unit is requested to search for the service with a source ID of, for example, "100", the service list search unit searches main service-list A, which has the highest priority level, and the service list acquisition unit 2504 acquires and returns the service data present in row 1711 of FIG. 17. In addition, when the service list search unit is requested to search for the service with a source ID of "700", the service list search unit searches main service-list A, which has the highest priority level, and the service list acquisition unit 2504 acquires and returns the service data present in row 2715 of FIG. 28. Note that the priority levels of the already-stored main service-lists may be in any order. Moreover, the priority level may be variable, and there may be main service-lists not searched, depending on conditions at the time of the search. For example, in the OCAP environment, an OOB broadcast signal can be received while the CableCARD 1811 is connected to terminal apparatus 1800; however, when the connection is terminated, the OOB broadcast signal can no longer be received, and thus only the In-band PSIP is receivable. In such a case, the following system, for example, may be employed: when the CableCARD 1811 is present, operations are performed based on a rule that searching is carried out first on the main service-list B (constructed of OOB LVCT) and then on the main service-list A (OOB NIT, NTT, SVCT), and the main service-list C is not searched; and when the CableCARD 1811 is not present, only the main service-list C (constructed of In-band LVCT) is searched.

Note that in the present embodiment, main service-lists are prepared for all sub service-lists on a one-to-one basis; however, some main service-lists used may be the main service-list described in the first embodiment, and some main service-lists may be specific main service-lists already prepared. For example, two of the three main service-lists may be main service-lists such as described in the first embodiment, and one may be a main service-list corresponding to a specific sub service-list, such as in the present example. Moreover, as described earlier, in terminals which examine In-band frequency bands after purchase and calibrate an initial sub service-list from basic information such as the PMT, there are cases in which the already-stored main service-list created at that time is used as a basic list, and is stored even after the SI table is acquired and the sub service-list is created from the SI table. Such a system may also be utilized.

In addition, in the present embodiment, when incorrect service data is present in the sub service-list, the data in the main service-list will also be incorrect, as was the case in the first embodiment. A configuration can be considered in which managing a history of the main service-list is implemented for the main service-list corresponding to such a sub service-list. In such a case, when the service list control unit 2501 receives feedback that the service data is incorrect from a module external to the SI management module 2006, the corresponding service data held within the main service-list is deleted, and the previous service data is restored, in the same manner as the first embodiment. Moreover, a method in which a history is created per main service-list and the main service-list is restored to that history, rather than managing per service data, is also possible. Furthermore, in the present embodiment, based on the fact that plural main service-lists are stored in the service data storage unit 2502, when the service list control unit 2501 is notified of incorrect service data, it is possible for only the corresponding service data held in the main service-list to be deleted. In such a case, at the time of a search performed by the service list acquisition unit 2504 (service data search unit), rather than using the corresponding service data, if service data with an identical source ID is present in a main service-list with a lower priority level, that service data may be used in the search instead. Further still, a configuration may be utilized in which, when the service list control unit 2501 receives a notification of incorrect service data, setting are changed so that the entire main service-list that includes the corresponding service data is deleted or is not used in searching. In such a case, when, for example, the already-stored main service-list shown in FIG. 17 is used, and the service list control unit 2501 receives a notification that the service data with a source ID of "100" (row 1711) is incorrect, the settings may be changed so that this entire main service-list is not used in searches. Thereafter, this main service-list is not used by the service list acquisition unit 2504 (service data search unit) until a sub service-list corresponding to this main service-list is constructed; instead, a main service-list with the next-highest priority level is used. When the corresponding sub service-list has been correctly updated, the main service-list, the use of which had been stopped, can be used once again.

### Industrial Applicability

The broadcast reception device according to the present invention has the advantageous effect of being able to use SI to present correct information to a user even when plural types of SI are distributed, and is applicable in, for example, a broadcast reception device which displays an EPG for digital broadcast, information devices such as cellular phones which receive SI, and the like.

## Claims

1. A broadcast reception device which receives a broadcast signal and performs an operation in accordance with the broadcast signal, said apparatus comprising:
a storage unit operable to store first service notification information which includes service data indicating a service to present to a viewer;
an acquisition unit operable to acquire, from the broadcast signal, second and third service notification information, each of which includes service data indicating a service to present to the viewer, and which differs in format from the other; and
an updating unit operable to update the first service notification information based on the service data included in the second service notification information when said acquisition unit has acquired the second service notification information, and to update the first service notification information based on the service data included in the third service notification information when said acquisition unit has acquired the third service notification information.

2. The broadcast reception device according to Claim 1,
wherein identification information for identifying the service indicated by the service data is assigned to each unit of service data included in the first, second, and third service notification information, and
said updating unit includes:
a first addition unit operable to add the service data of the second service notification information to the first service notification information, when identification information identical to the identification information of the service data included in the second service notification information is not present in the first service notification information; and
a second addition unit operable to add the service data of the third service notification information to the first service notification information, when identification information identical to the identification information of the service data included in the third service notification information is not present in the first service notification information.

3. The broadcast reception device according to Claim 2,
wherein said updating unit further includes:
a first changing unit operable to change the details of the service data included in the first service notification information to the details of the service data included in the second service notification information, when the service data in the first and second service notification information have identical identification information and mutually different details; and
a second changing unit operable to change details of the service data included in the first service notification information to the details of the service data included in the third service notification information, when the service data in the first and third service notification information have identical identification information and mutually different details.

4. The broadcast reception device according to Claim 3,
wherein plural units of service data are present in the first service notification information, and
said broadcast reception device further comprises:
a search unit operable to acquire the identification information and search for service data corresponding to the identification information within the first service notification information; and
an output unit operable to output the service data searched-out by said search unit.

5. The broadcast reception device according to Claim 4, further comprising
a deletion unit operable to delete the service data searched-out by said search unit.

6. The broadcast reception device according to Claim 1,
wherein the first service notification information is configured of fourth and fifth service notification information which include service data indicating services to present to the viewer, and
said updating unit is operable to update: the fourth service notification information based on the service data included in the second service notification information when said acquisition unit has acquired the second service notification information; and the fifth service notification information based on the service data included in the third service notification information when said acquisition unit has acquired the third service notification information.

7. The broadcast reception device according to Claim 6,
wherein identification information for identifying the service indicated by the service data is assigned to each unit of service data included in the second, third, fourth, and fifth service notification information, and
said updating unit includes:
a first addition unit operable to add the service data of the second service notification information to the fourth service notification information, when identification information identical to the identification information of the service data included in the second service notification information is not present in the fourth service notification information; and
a second addition unit operable to add the service data of the third service notification information to the fifth service notification information, when identification information identical to the identification information of the service data included in the third service notification information is not present in the fifth service notification information.

8. The broadcast reception device according to Claim 7,
wherein said updating unit further includes:
a first changing unit operable to change details of the service data included in the fourth service notification information to the details of the service data included in the second service notification information, when the service data in the fourth and second service notification information have identical identification information and mutually different details; and
a second changing unit operable to change details of the service data included in the fifth service notification information to the details of the service data included in the third service notification information, when the service data in the fifth and third service notification information have identical identification information and mutually different details.

9. The broadcast reception device according to Claim 8,
wherein priority levels are assigned to the fourth and fifth service notification information, and
said broadcast reception device further comprises:
a search unit operable to acquire the identification information, and to search for service data within a search range while switching the search range from service notification information of a higher priority level to service notification information of a lower priority level, the service data corresponding to the identification information; and
an output unit operable to output the service data searched-out by said search unit.

10. The broadcast reception device according to Claim 9,
wherein when said search unit finds service data corresponding to the identification information, said output unit is operable to output the service data.

11. The broadcast reception device according to Claim 9, further comprising
a deletion unit operable to delete the service data searched-out by said search unit.

12. The broadcast reception device according to Claim 1,
wherein identification information for identifying the service indicated by the service data is assigned to each unit of service data included in the first, second, and third service notification information, and
said updating unit includes:
a first deletion updating unit operable to delete the service data from the first service notification information, when identification information identical to the identification information of the service data included in the first service notification information is not present in the second service notification information; and
a second deletion updating unit operable to delete the service data from the first service notification information, when identification information identical to the identification information of the service data included in the first service notification information is not present in the third service notification information.

13. The broadcast reception device according to Claim 1,
wherein identification information for identifying the service indicated by the service data is assigned to each unit of service data included in the first, second, and third service notification information, and
said updating unit includes:
a first history addition unit operable to add the service data of the second service notification information to the first service notification information while leaving the service data of the first service notification information as a history, when the service data in the first and second service notification information have identical identification information and mutually different details; and
a second history addition unit operable to add the service data of the third service notification information to the first service notification information while leaving the service data of the first service notification information as a history, when the service data in the first and third service notification information have identical identification information and mutually different details.

14. The broadcast reception device according to Claim 1,
wherein identification information for identifying the service indicated by the service data is assigned to each unit of service data included in the first, second, and third service notification information, and
said updating unit includes:
a first history setting unit operable to set the service data in an unusable state, as a history, when identification information identical to the identification information of the service data included in the first service notification information is not present in the second service notification information; and
a second history setting unit operable to set the service data in an unusable state, as a history, when identification information identical to the identification information of the service data included in the first service notification information is not present in the third service notification information.

15. The broadcast reception device according to Claim 1,
wherein said storage unit includes a volatile memory and a non-volatile memory, and
said updating unit is operable to generate, in advance, a copy of the first service notification information based on the first service notification information stored in said non-volatile memory, store the copy in said volatile memory, and update the copied first service notification information stored in said volatile memory when the first service notification information is to be updated.

16. The broadcast reception device according to Claim 15,
wherein after finishing the update of the copied first service notification information stored in said volatile memory, said updating unit is operable to write the updated first service notification information into said non-volatile memory.

17. The broadcast reception device according to Claim 16,
wherein when the details of the updated first service notification information differ from the details of the first service notification information stored as an original in said non-volatile memory, said updating unit is operable to write the updated first service notification information into said non-volatile memory.

18. The broadcast reception device according to Claim 15,
wherein said updating unit is operable to write the updated first service notification information into said non-volatile memory when requested to perform a write into said non-volatile memory.

19. The broadcast reception device according to Claim 15,
wherein when writing the updated first service notification information into said non-volatile memory, said updating unit is operable to write the updated first service notification information as a new original into said non-volatile memory after deleting the first service notification information stored as the original from said non-volatile memory.

20. The broadcast reception device according to Claim 15,
wherein when writing the updated first service notification information into said non-volatile memory, said updating unit is operable to delete the first service notification information stored as the original in said non-volatile memory before the write, after writing the updated first service notification information as a new original into said non-volatile memory.

21. The broadcast reception device according to Claim 15,
wherein when writing the updated first service notification information into said non-volatile memory, said updating unit is operable to write the updated first service notification information as a new original into said non-volatile memory, and when power is resupplied to said broadcast reception device after the write, said updating unit is operable to generate a copy of the first service notification information written as the new original and store the copy in said volatile memory.

22. A broadcast receiving method in which a broadcast reception device receives a broadcast signal and performs an operation in accordance with the broadcast signal,
wherein said broadcast reception device comprises a storage unit operable to store first service notification information which includes service data indicating a service to present to a viewer, and
said method comprises:
an acquisition step of acquiring, from the broadcast signal, second and third service notification information, each of which includes service data indicating a service to present to the viewer, and which differs in format from the other; and
an updating step of updating the first service notification information based on the service data included in the second service notification information when the second service notification information has been acquired in said acquisition step, and updating the first service notification information based on the service data included in the third service notification information when the third service notification information has been acquired in said acquisition step.

23. A program which causes a broadcast reception device to perform an operation in accordance with a received broadcast signal,
wherein said broadcast reception device comprises a storage unit operable to store first service notification information which includes service data indicating a service to present to a viewer, and
said method comprises:
an acquisition step of acquiring, from the broadcast signal, second and third service notification information, each of which includes service data indicating a service to present to the viewer, and which differs in format from the other; and
an updating step of updating the first service notification information based on the service data included in the second service notification information when the second service notification information has been acquired in said acquisition step, and updating the first service notification information based on the service data included in the third service notification information when the third service notification information has been acquired in said acquisition step.
